# EUROPEAN PATENT SPECIFICATION

(11) **EP 2 675 182 B1**
(45) Date of publication and mention of the grant of the patent: **04.03.2015**
(21) Application number: 13171507.0
(22) Date of filing: 11.06.2013
(51) Int. Cl.: H04Q 1/02

(54) **Positionable termination panel**
Positionierbare Abschlussplatte
Panneau de terminaison positionnable

(30) Priority: 11.06.2012 US 201261658223 P
(43) Date of publication of application: 18.12.2013
(73) Proprietor: Tyco Electronics Raychem BVBA, 3010 Kessel-Lo (BE)
(72) Inventor: Collart, Stephane, B-2250 Olen (BE); Cornelissen, Kurt, B-2235 Hulshout (BE); Schurmans, Eric, 3450 Geetbets (BE); Vanwinkel, Karel A. C., 3390 Tielt-Winge (BE)
(74) Representative: Patentanwälte Bressel und Partner mbB

(56) References cited:
- WO-A1-2010/025901
- US-A1- 2006 018 622

## Description

### Background

In telecommunications, ease of access to both ports of adapters is desirable. However, achieving ease of access in telecommunication connectivity leads to certain design challenges. Cable management and density are both issues that must be taken into consideration in configuration of equipment. There is a need in the art for telecommunications equipment that can achieve high connectivity density, utilize standard footprints, and provide effective cable management as well as easy accessibility to all major components of the equipment.

The US 2006/0018622 A1 discloses a patch panel assembly which includes a drawer and a patch panel pivotally mounted to the drawer. The drawer has a pair of sidewalls and a cable tray positioned there between. The cable tray has a plurality of slide locks including lock releases that allow the cable tray to move between a closed position and an open position with respect to the sidewalls. The cable tray has also a plurality of retainer clips that allow the patch panel to move between an upright position and a rotated position with respect to the cable tray.

### Summary

The present disclosure relates to panel arrangement including an array of termination locations at a first face and an array of termination locations at a second face. The panel arrangement is stored in a home position (e.g., within an enclosure, relative to a frame, etc.). The panel arrangement may be moved in at least one direction to improve access to at least one of the first and second faces, thereby improving access to the array of termination locations located thereat. Certain types of panel arrangements can be moved in a first direction to improve access to the first face and in a second direction to improve access to the second face.

According to some aspects, a panel assembly including a panel arrangement mounted to a frame. The panel arrangement is configured to move relative to the frame between undeflected and deflected positions. In certain implementations,

the panel arrangement may move between multiple deflected positions. In certain implementations, the panel arrangement may be locked into any of the deflected and undeflected positions. In certain implementations, the panel arrangement slides between the positions. In certain implementations, the panel arrangement pivots between the positions. In certain implementations, the pivot axis of the panel arrangement slides during movement between the positions.

According to some aspects, each end of the panel arrangement includes two followers. Each follower slides along its own channel defined in the frame as the panel arrangement is moved between the positions. In certain implementations, each channel includes two segments that extend along different directions. In certain implementations, one of the channels defines a detent at an intermediate location along one of the segments.

According to other aspects, a panel assembly includes a frame and a panel arrangement. The frame includes two side flanges. Each of the side flanges defines a channel arrangement. Each channel arrangement includes a first channel and a second channel that is separated from the first channel. The panel arrangement extends between first and second mounting sections. Each mounting section is coupled to one of the side flanges of the frame via first and second followers. The first follower of each mounting section engages the first channel of the respective side flange and the second follower of each mounting section engages the second channel of the respective side flange. The panel arrangement is moveable relative to the frame between at least an undeflected position and a first deflected position by moving the followers within the channel arrangements.

In certain implementations, the panel arrangement also is moveable to a second deflected position that is different from the first deflected position and the undeflected position.

In certain implementations, the panel arrangement pivots about an axis extending through the first followers when the panel arrangement is moved to the first deflected position. In certain implementations, the panel arrangement pivots about an axis extending through the second followers when the panel arrangement is moved to the second deflected position.

In some implementations, each channel includes a first segment and a second segment. In certain implementations, the first followers of the panel arrangement move along the second segments of the first channels when the panel arrangement is moved to the first deflected position. In certain implementations, the second followers of the panel arrangement move along the second segments of the second channels when the panel arrangement is moved to the second deflected position.

In certain implementations, a notch is defined at the second end of the second segment of each channel. The panel arrangement is locked from moving relative to the frame when at least two of the followers engage two of the notches.

In certain implementations, a detent is provided at a channel edge of the first segment of the second channel.

In certain implementations, the side flanges extend from opposite ends of a mounting section of the frame.

According to other aspects, a panel assembly includes a frame and a panel arrangement mounted to the frame to move between at least an undeflected position and a first deflected position. The frame includes two side flanges extending from opposite ends of a mounting section. Each of the side flanges defines a channel arrangement. The mounting section includes retention fingers that define a management passage. The panel arrangement extends from a first end to a second end and from a first edge to a second edge. The first edge of the panel arrangement faces the mounting section of the frame and the second edge of the panel arrangement faces away from the mounting section of the frame. The panel arrangement includes at least one follower extending from each end towards one of the side flanges of the frame. Each follower engages the channel arrangement of the respective side flange. A gap is maintained between the first edge of the panel arrangement and the mounting section of the frame throughout movement of the panel arrangement between the undeflected position and the first deflected position.

In some implementations, the panel arrangement includes a main section and two mounting sections. Each of the mounting sections defines one of the ends of the panel arrangement. The main section defines the first and second edges of the panel arrangement. The main section also defines a first major surface and an opposite second major surface that extend between the first and second ends and the first and second edges.

In certain implementations, the first major surface of the main section of the panel arrangement faces away from the mounting section when the panel arrangement is in the first deflected position.

In certain implementations, the second major surface of the main section of the panel arrangement faces away from the mounting section when the panel arrangement is in the first deflected position.

In certain implementations, the panel arrangement extends generally orthogonally to the mounting section of the frame when the panel arrangement is in the undeflected position.

In certain implementations, the panel arrangement is oriented at an angle relative to the mounting section of the frame, wherein the angle is greater than 0 and less than 90°. In certain implementations, the angle ranges between 30° and 70°. In certain implementations, the angle ranges between 40° and 60°.

In certain implementations, each channel arrangement includes a first channel and a second channel.

According to other aspects, a method of accessing a termination field provided on a panel mounted to a frame includes pulling the panel away from a mounting section of the frame so that a first follower of the panel arrangement moves along a first channel and a second follower of the panel arrangement moves along a second channel in a first direction; continuing to pull the panel away from the mounting section until the first follower of the panel aligns with a channel segment of the first channel and the second follower engages a detent of the second channel; and pivoting the panel arrangement about a pivot axis that extends along the second follower and moving the first follower through the channel segment of the first channel in a second direction that is different from the first direction.

According to other aspects, a method of accessing a termination field provided on a panel mounted to a frame includes pulling the panel away from a mounting section of the frame so that a first follower of the panel arrangement moves along a first channel and passes a channel segment of the first channel and a second follower of the panel arrangement moves along a second channel and passes a detent of the second channel; continuing to pull the panel away from the mounting section until the second follower reaches a transition between first and second segments of the second channel; and pivoting the panel arrangement about a pivot axis that extends along the first follower and moving the second follower through the second segment of the second channel.

According to other aspects, an enclosure includes a panel assembly mounted to a first wall of a base. The panel assembly includes a frame and a panel arrangement that is configured to hold telecommunications components. The panel arrangement has a first major surface from which first ports of the telecommunications components are accessible and a second major surface from which second ports of the telecommunications components are accessible. The panel arrangement is configured to move relative to the frame between an undeflected position, a first deflected position, and a second deflected position. The first major surface of the panel arrangement faces a top of the base when the panel arrangement is in the undeflected position. The first major surface of the panel arrangement faces at least partially towards the open front of the base when the panel arrangement is in the first deflected position.

In certain implementations, one or more splitter modules may be mounted to the base.

In certain implementations, the ports at the first side of the panel arrangement are formed by optical adapters and at least some of the ports at the second side of the panel arrangement are formed by optical adapters. In one example implementation, at least some of the ports at the second side of the panel arrangement are formed by connector holders.

In some implementations, subscriber fibers may be routed within the enclosure to extend through a gap between the panel arrangement and the frame, through a passage defined by retention fingers of the frame, and looped back towards the first major surface of the panel arrangement. Splitter output fibers may be routed within the enclosure to extend away from the splitter module, past the panel assembly, and back to the second major surface of the panel arrangement.

A variety of examples of desirable product features or methods are set forth in part in the description that follows, and in part will be apparent from the description, or may be learned by practicing various aspects of the disclosure. The aspects of the disclosure may relate to individual features as well as combinations of features. It is to be understood that both the foregoing general description and the following detailed description are explanatory only, and are not restrictive of the claimed invention.

### Brief Description of the Drawings

FIG. 1 is a front perspective view of an example panel assembly including a frame, a panel arrangement, and telecommunications components mounted to the panel arrangement in accordance with the principles of the present disclosure;
FIG. 2 is a front elevational view of the panel assembly of FIG. 1;
FIG. 3 is a bottom perspective view of the panel assembly of FIG. 1;
FIG. 4 is an exploded view of the panel assembly of FIG. 1 without the telecommunications components;
FIG. 5 is a bottom plan view of the panel assembly of FIG. 1;
FIG. 6 is a first end elevational view of the panel assembly of FIG. 1;
FIGS. 7-13 illustrate the movement of followers of the panel arrangement within channels of the frame as the panel arrangement is moved between the various positions with FIG. 7 showing an undeflected position, FIG. 10 showing a first deflected position, and FIG. 13 showing the second deflected position;
FIG. 14 is a front perspective view of an example enclosure in which the panel assembly of FIG. 1 is mounted, partially cabled, and arranged in the undeflected position;
FIG. 15 is a cross-sectional view of the enclosure of FIG. 14 taken along a longitudinal axis of the enclosure with the only visible cabling being the subscriber fibers to facilitate understanding;
FIG. 16 is a front perspective view of the example enclosure of FIG. 14 in which the panel arrangement is in the first deflected position;
FIG. 17 is a cross-sectional view of the enclosure of FIG. 16 taken along the longitudinal axis of the enclosure with the only visible cabling being the subscriber fibers to facilitate understanding;
FIG. 18 is a front perspective view of the example enclosure of FIG. 14 in which the panel arrangement is in the second deflected position;
FIG. 19 is a cross-sectional view of the enclosure of FIG. 18 taken along the longitudinal axis of the enclosure with the only visible cabling being the subscriber fibers to facilitate understanding;
FIGS. 20-22 illustrate alternative channel arrangements.

### Detailed Description

Reference will now be made in detail to various features of the present disclosure that are illustrated in the accompanying drawings. Wherever possible, the same reference numbers will be used throughout the drawings to refer to the same or like parts.

Referring to the drawings in general, the present disclosure relates to panel arrangement 110 including an array of termination locations at a first face 112 and an array of termination locations at a second face 113. The panel arrangement 110 is stored in a home position (e.g., within an enclosure, relative to a frame, etc.). The panel arrangement 110 may be moved in at least one direction to improve access to at least one of the first and second faces 112, 113, thereby improving access to the array of termination locations located thereat. Certain types of panel arrangements 110 can be moved in a first direction to improve access to the first face 112 and in a second direction to improve access to the second face 113.

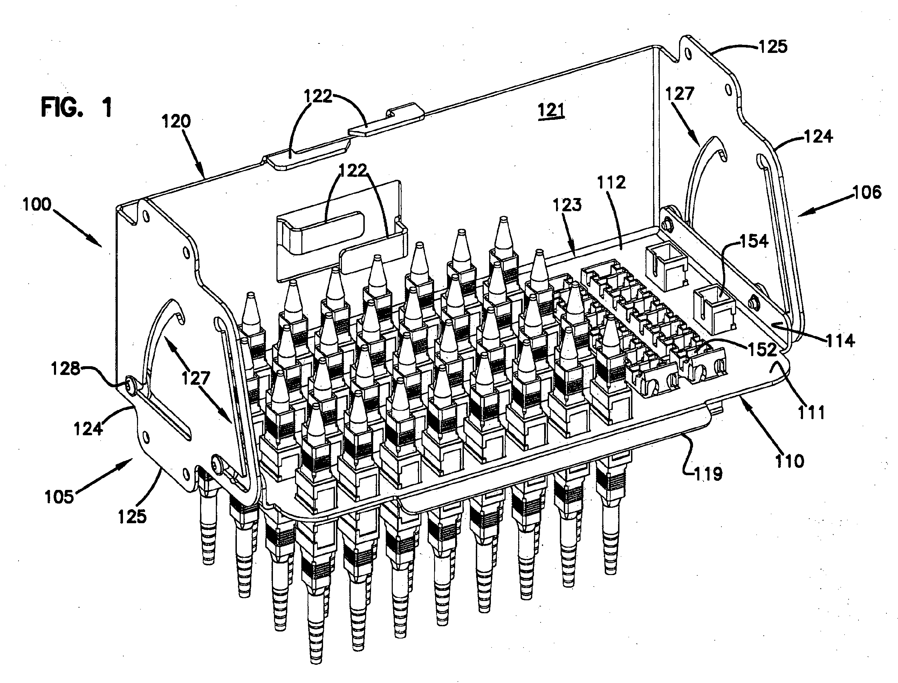

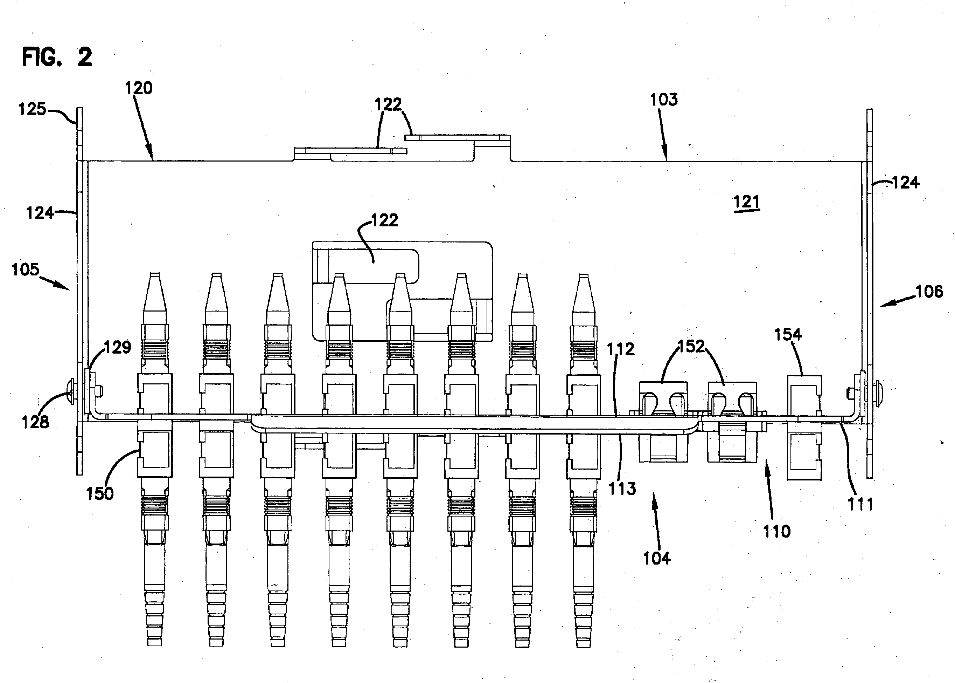

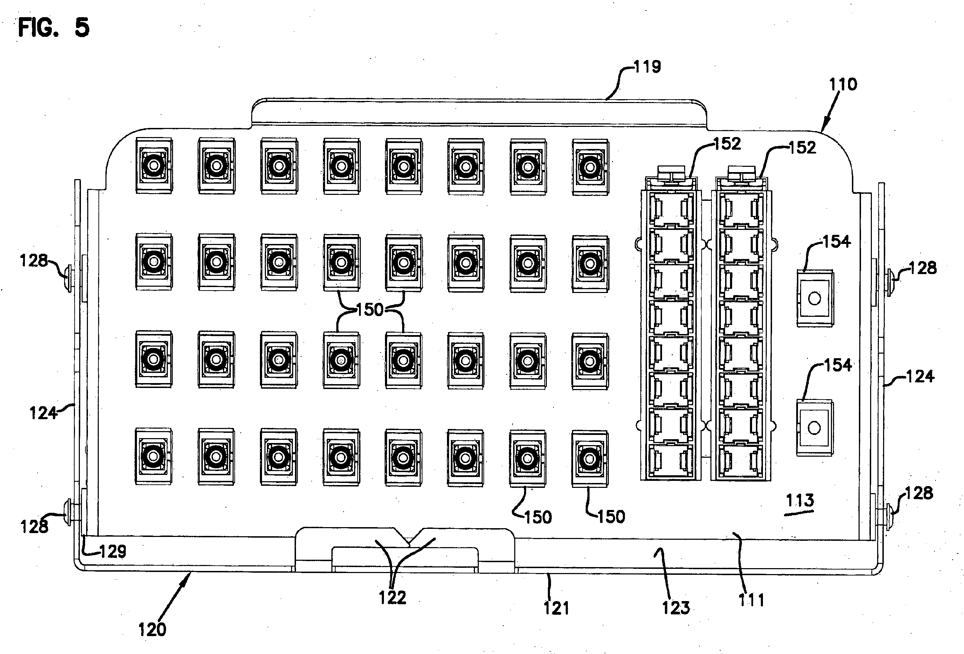

FIGS. 1-6 illustrate one example panel assembly 100 including features that are examples of inventive aspects of the present disclosure. The panel assembly 100 has a mounting side 101, an open side 102 opposite the mounting side 101, a first side 103, a second side 104 opposite the first side 103, a first end 105, and a second end 106 opposite the first end 105. The panel assembly 100 includes a panel arrangement 110 mounted to a frame 120. The panel arrangement 110 is moveable relative to the frame 120.

The panel arrangement 110 includes a main section 111 having a first surface 112 and an opposite second surface 113. The first and second surfaces 112, 113 define major surfaces of the main section 110. Mounting flanges 114 extend from opposite ends of the main section 111. In the example shown, each of the mounting flanges 114 is bent, folded, or otherwise extends at an angle to the main section 111. In certain implementations, follower wells 115 are provided at the mounting flanges 114. In other implementations, follower apertures may extend through the mounting flanges. A handle 119 extends forwardly from an edge of the main section 111.

The main section 111 of the panel arrangement 110 defines one or more apertures at which telecommunications components may be mounted. In some implementations, the telecommunications components include optical components. For example, optical adapters, optical connector holders, fanout devices, cable spools, or other optical components may be provided at the main section 111. In other implementations, the telecommunications components include electrical components.

In some implementations, the apertures include at least adapter apertures 116 extending through the main section 111 from the first side 112 to the second side 113. The adapter apertures 116 are sized to receive one or more optical adapters 150. In the example shown, the main section 111 defines multiple apertures that are each sized to receive optical adapters 150. In some implementations, the main section 111 defines multiple rows of adapter apertures 116. In the example shown, the main section 111 defines four rows of eight adapter apertures 116. In other implementations, the main section 111 may define a greater or lesser number of rows and/or a greater or lesser number of adapter apertures 116 per row. In other implementations, one or more of the adapter apertures 116 may be sufficiently elongated to receive multiple adjacent optical adapters 150. In still other implementations, one or more of the adapter apertures 116 is configured to receive adapter blocks.

In some implementations, the apertures also include one or more holder apertures 117 extending through the main section 111 from the first side 112 to the second side 113. The holder apertures 117 are sized to receive one or more connector holders 152. Each connector holder block 152 is configured to receive connectorized ends of fibers when the fibers are not in service. In the example shown, the main section 111 defines at least one holder aperture 117 that are each sized to receive one or more connector holder block 152. In the example shown, one holder aperture 117 receives two connector holder blocks 152. In other implementations, the main section 111 may include a greater or lesser number of holder apertures 117.

In some implementations, the apertures also include one or more interface apertures 118 extending through the main section 111 from the first side 112 to the second side 113. The interface apertures 118 are sized to receive one or more interface members that couple to feeder cables. In certain implementations, the interface members include optical adapters 150 that are each configured to couple a connectorized end of a feeder fiber to a connectorized end of a splitter input fiber. In the example shown, the main section 111 defines two interface apertures 118 that are each sized to receive an optical adapter 150. In other implementations, the main section 111 may include a greater or lesser number of interface apertures 118.

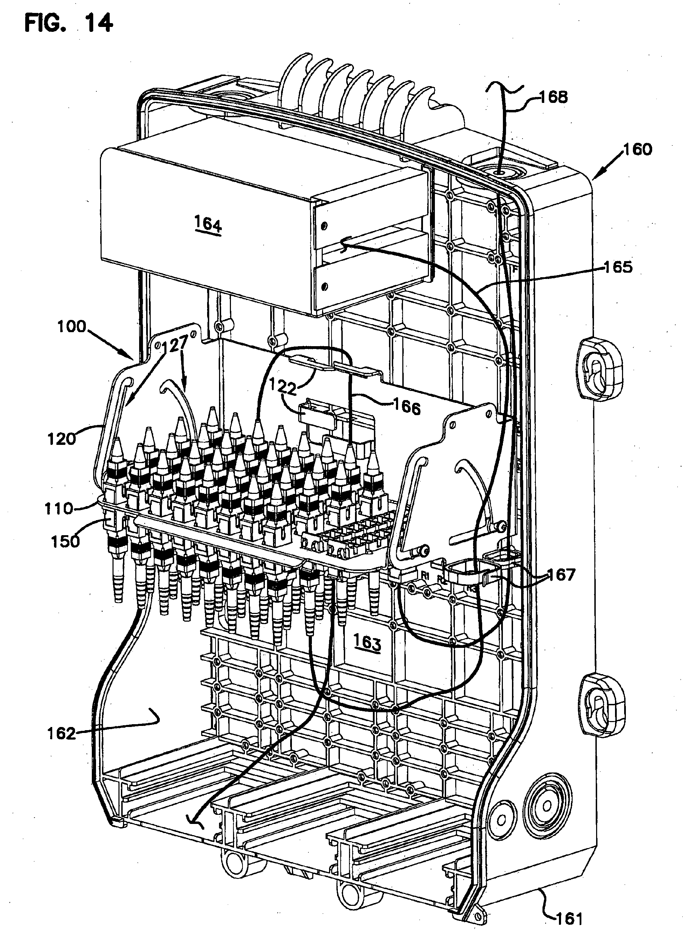

The frame 120 is configured to receive the panel arrangement 110 using followers 128 as will be described in more detail herein. The frame includes at least two support walls 124 that each define at least one channel arrangement 127 that defines a path which the panel arrangement 110 may follow to move between two or more positions. Each channel arrangement 127 includes one or more channels. In certain implementations, the channel arrangement 127 of each support wall 124 is a mirror image of the channel arrangement 127 of the other support wall 124. In some implementations, the support walls 124 are laterally aligned, spaced apart walls. In certain implementations, the support walls 124 are separate from each other. For example, the support walls 124 may be mounted to opposite sides of a rack or enclosure (e.g., see enclosure 160 in FIG. 14). In other implementations, the support walls 124 may be connected together using one or more framework pieces.

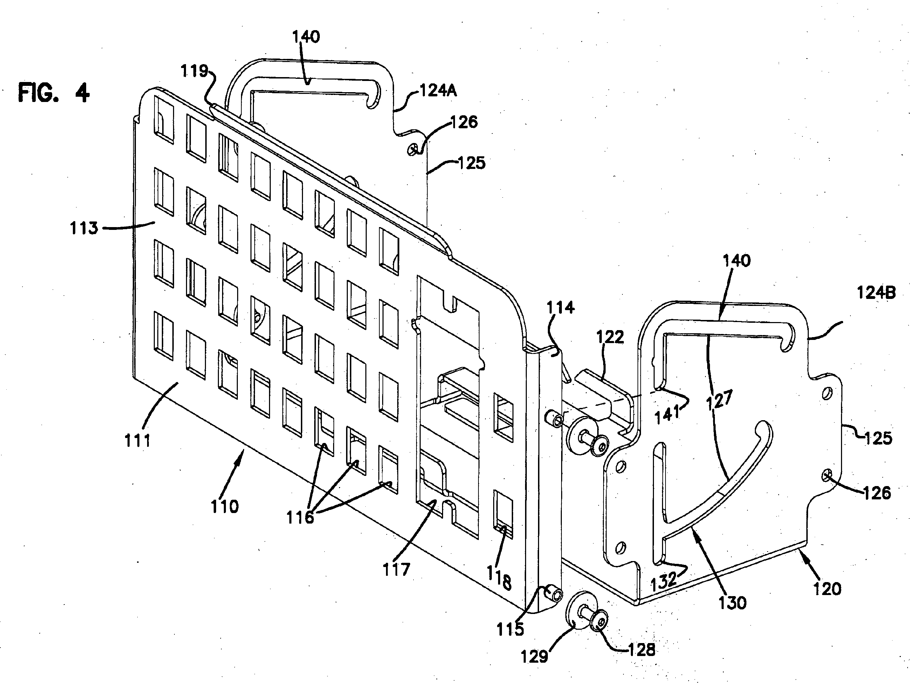

In some implementations, the frame 120 includes a mounting section 121 connecting the two support walls 124A, 124B (see FIG. 4). In certain implementations, the support walls 124A, 124B extend from opposite ends of the mounting section 121 to form a generally U-shaped structure. In the example shown, the support walls 124A, 124B are formed by side flanges of the mounting section 121. The mounting section 121 defines the mounting side 101 of the panel assembly 100; and the side flanges 124A, 124B define the first and second ends 105, 106 of the panel assembly 100. The open side 102 extends between distal ends of the side flanges 124A, 124B. The panel arrangement 110 is oriented relative to the frame 120 to extend between the side flanges 124A, 124B. The first side 112 of the main section 111 faces the first side 101 of the panel assembly 100 and the second side 113 of the main section 111 faces the second side 102 of the panel assembly 100.

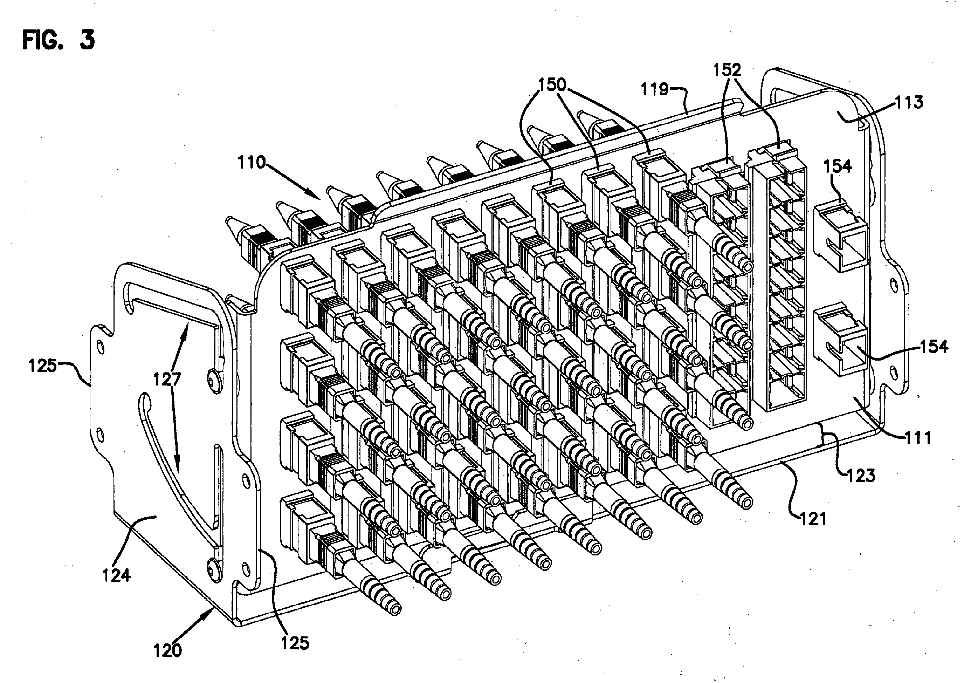

In some implementations, the mounting section 121 of the frame 120 provides cable management features to aid in organizing and managing the optical fibers routed to the panel arrangement 110. In certain implementations, the mounting section 121 includes retention fingers 122 that extend forwardly of the mounting section 121 to form a channel or passage through which fibers may be routed. In certain implementations, the panel arrangement 110 is positioned relative to the frame 120 to leave a gap 123 (FIG. 3) through which optical fibers may be routed. The panel arrangement 110 and frame 120 are connected so that the gap 123 remains despite movement of the panel arrangement 110 relative to the frame 120, thereby avoiding pinching of the optical fibers.

Tabs 125 may extend upwardly or downwardly from the side flanges 124 (i.e., towards the first side 103 and second side 104 of the panel assembly 100). Cable management features may be provided at the tabs 125. For example, one or more retaining rings, cable clamp, cable ties, straps, or other management members 167 (see FIG. 14) may be coupled to the tabs 125. In certain implementations, the tabs 125 each define one or more fastening apertures 126 at which the management features may be attached to the tabs 125. In the example shown, each tab 125 defines two fastening apertures 126.

The panel arrangement 110 connects to the frame 120 at the side flanges 124. In particular, followers 128 extend outwardly from the mounting flanges 114 of the panel arrangement. The side flanges 124 define guide channel arrangements 127 along which the followers 128 may slide or otherwise move. In the example shown, each follower 128 includes a head portion that is larger than a cross-dimension of a channel of the respective guide channel arrangement 127 and a post that extends from the head, through the respective channel, and attaches to one of the mounting flanges 114 of the panel arrangement 110. For example, the post may extend through a follower well 115 provided at the mounting flange 114. In certain implementations, a washer 129 is mounted over each follower between the mounting flange 114 and an inner surface of the respective side flange 124, thereby reducing friction therebetween.

In certain implementations, each channel arrangement 127 includes a first channel 130 and a second channel 140. Each of these channels 130, 140 is configured to receive one follower 128 of the panel arrangement 110. Each channel 130, 140 is sized to enable the post of the follower 128 to ride along the channel 130, 140 and to inhibit the head of the follower 128 from passing through the channel 130, 140.

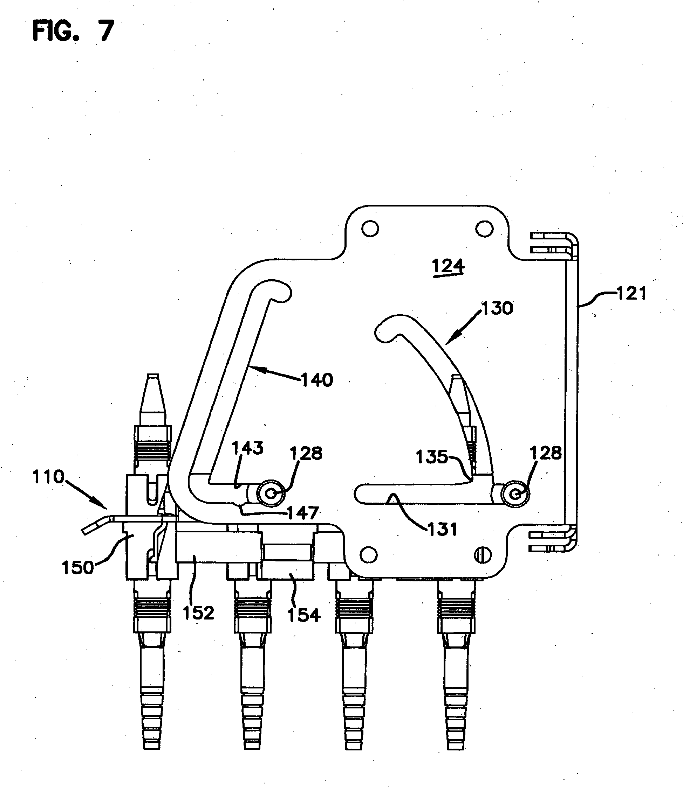

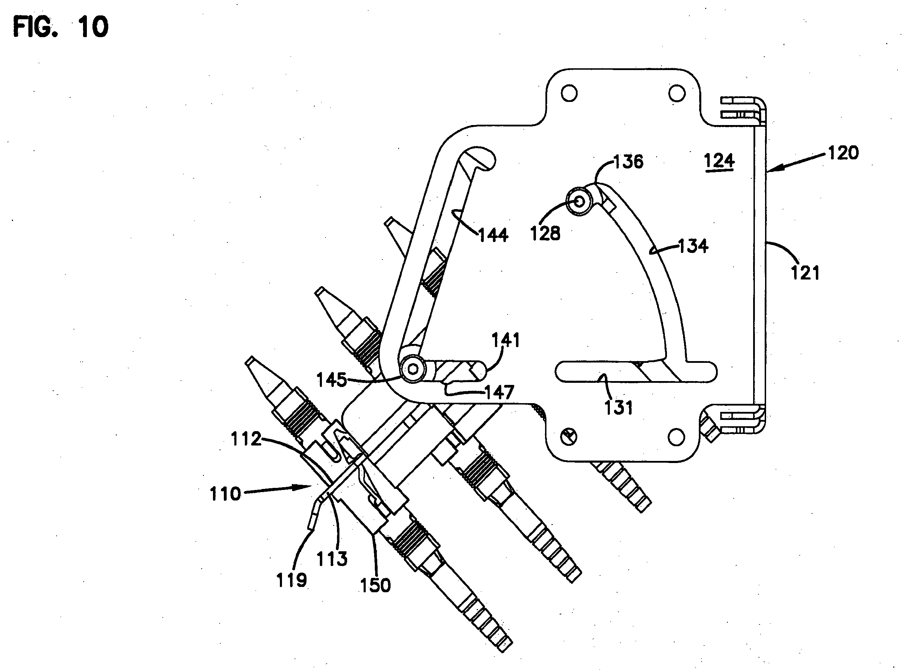

As shown in FIGS. 7-13, the channel arrangement 127 enables the panel arrangement 110 to move between two or more positions relative to the frame 120. In some implementations, the channel arrangement 127 enables the panel arrangement 110 to move between an undeflected position (see FIG. 7) and a first deflected position (see FIG. 10). In certain implementations, the main section 111 of the panel arrangement 110 is generally orthogonal to the mounting section 121 of the frame 120 when in the undeflected position. In certain implementations, the first side 112 of the main section 111 faces towards the first side 103 of the panel assembly 100 and the second side 113 of the main section 111 faces towards the second side 104 of the panel assembly 100 when the panel arrangement 110 is in the undeflected position.

In some implementations, the main section 111 of the panel arrangement 110 extends at an angle greater than 0 and less than 90° relative to the mounting section 121 of the frame 120 when the panel arrangement 110 is in the first deflected position. In certain implementations, the edge of the main section 111 that is closest to the open side 102 moves downwardly when the panel arrangement 110 is moved to the first deflected position. Accordingly, access to the first surface 112 of the main section 111 is facilitated, especially when the panel arrangement 110 is positioned at an elevated height relative to the user.

In certain implementations, the angle of the main section 111 ranges between about 10° and about 80°. In certain implementations, the angle of the main section 111 ranges between about 20° and about 70°. In certain implementations, the angle of the main section 111 ranges between about 30° and about 50°. In certain implementations, the angle of the main section 111 ranges between about 40° and about 50°. In certain implementations, the angle of the main section 111 ranges between about 50° and about 60°.

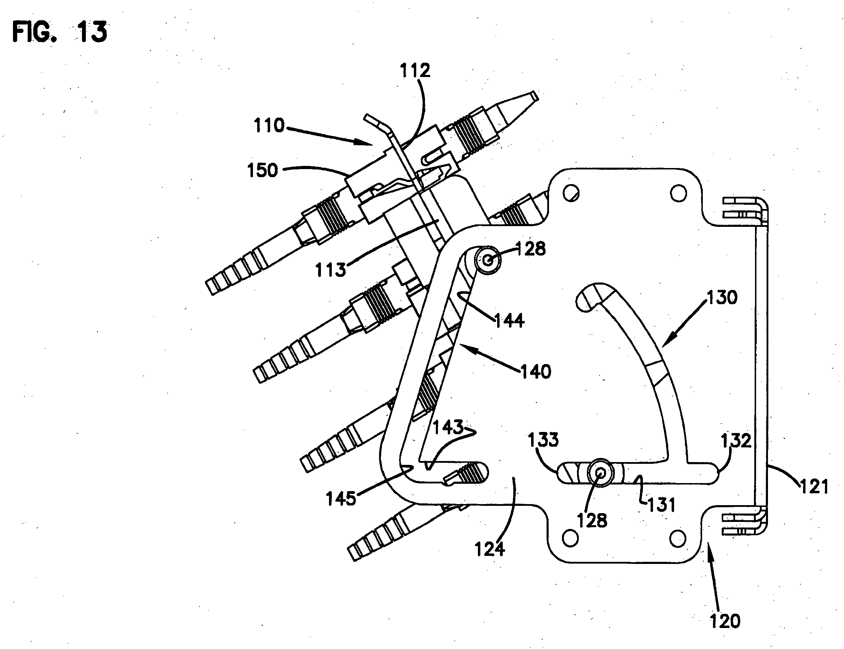

In some implementations, the channel arrangement 127 enables the panel arrangement 110 to move between three positions relative to the frame 120. In certain implementations, the channel arrangement 127 enables the panel arrangement 110 to move between the undeflected position (see FIG. 7), the first deflected position (see FIG. 10), and a second deflected position (see FIG. 13). In some implementations, the main section 111 of the panel arrangement 110 extends at an angle greater than 0 and less than 90° relative to the mounting section 121 of the frame 120 when the panel arrangement 110 is in the second deflected position. In certain implementations, the edge of the main section 111 that is closest to the open side 102 moves upwardly when the panel arrangement 110 is moved to the first deflected position. Accordingly, access to the second surface 113 of the main section 111 is facilitated, especially when the panel arrangement 110 is positioned at a depressed height relative to the user.

In certain implementations, the angle of the main section 111 ranges between about 10° and about 80° when the panel arrangement 110 is in the second deflected position. In certain implementations, the angle of the main section 111 ranges between about 20° and about 70°. In certain implementations, the angle of the main section 111 ranges between about 30° and about 50°. In certain implementations, the angle of the main section 111 ranges between about 40° and about 50°. In certain implementations, the angle of the main section 111 ranges between about 50° and about 60°.

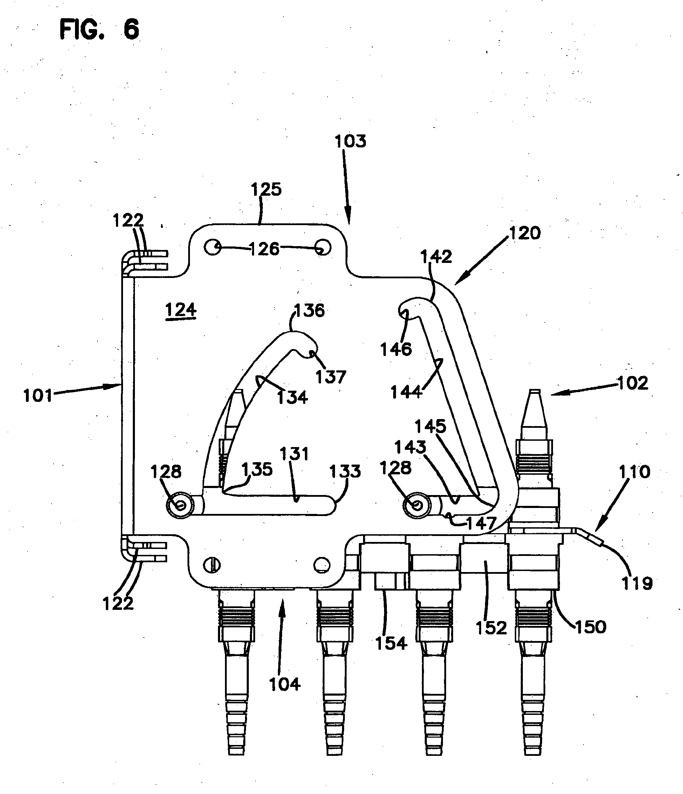

One example configuration for the channel arrangement 127 is shown in FIG. 6. The first channel 130 includes a first segment 131 and a second segment 134. The first segment 131 extends from a first end 132 (FIG. 4) to a second end 133. The second segment 134 extends from a first end 135 to a second end 136. The first end 135 of the second segment 134 branches off from the first segment 131 at an intermediate point between the first and second ends 132, 133 of the first segment 131. The first channel 130 defines a notch 137 at the second end 136 of the second segment 134.

In some implementations, one or both segment 131, 134 extend linearly. In other implementations, one or both segments 131, 134 extend along a curve. In other implementations, one of the segments 131, 134 is linear and the other segment 133, 134 is curved. In the example shown, the first segment 131 extends linearly between the mounting side 101 and open side 102 of the panel assembly 100. The second segment 134 curves upwardly from the first segment 131 towards the open side 102. The notch 137 curves downwardly and towards the open side 102 from the second end 136 of the second segment 134.

The second channel 140 extends from a first end 141 to a second end 142. The second channel 140 includes a first segment 143 that extends from the first end 141 to a transition 145. The second channel 140 also includes a second segment 144 that extends from the transition 145 to the second end 142 of the channel 140. The second segment 144 extends along a different direction than the first segment 143. The second channel 140 defines a notch 146 at the second end 142 of the channel 140. A detent 147 is provided along an edge of the first segment 143.

In some implementations, one or both segment 143, 144 extend linearly. In other implementations, one or both segments 143, 144 extend along a curve. In other implementations, one of the segments 143, 144 is linear and the other segment 143, 144 is curved. In the example shown, the first segment 143 extends linearly between the mounting side 101 and open side 102 of the panel assembly 100. The second segment 144 extends at an upward angle from the first segment 131 towards the mounting side 101 of the panel assembly 100. The notch 146 curves downwardly and towards the mounting side 101 from the second end 142 of the second channel 140.

FIGS. 7-13 illustrate the movement of the followers 128 within the channels 130, 140 as the panel arrangement 110 is moved between the various positions. For example, FIGS. 7-10 illustrate the movement of the followers 128 within the channels 130, 140 as the panel arrangement 110 is moved from the undeflected (FIG. 7) position to the first deflected position (FIG. 10). FIGS. 7 and 11-13 illustrate the movement of the followers 128 within the channels 130, 140 as the panel arrangement 110 is moved from the undeflected (FIG. 7) position to the second deflected position (FIG. 10).

FIG. 7 is a side elevational view of the panel assembly 100 in which the panel arrangement 110 is mounted to the frame 120 in the undeflected position. The followers 128 extending from the second end 106 of the panel arrangement 110 are shown located at the first ends 132, 141 of the channels 130, 140. The followers 128 extending from the first end 105 of the panel arrangement 110 are located at the second ends 132, 141 of the channels 130, 140. The main section 111 of the panel arrangement 110 extends generally parallel to the first segments 131, 143 of the channels 130, 140. While in this position, the edges of the channels 130, 140 maintain the followers 128 from moving upwardly or downwardly, thereby maintaining the panel arrangement 110 in the undeflected position.

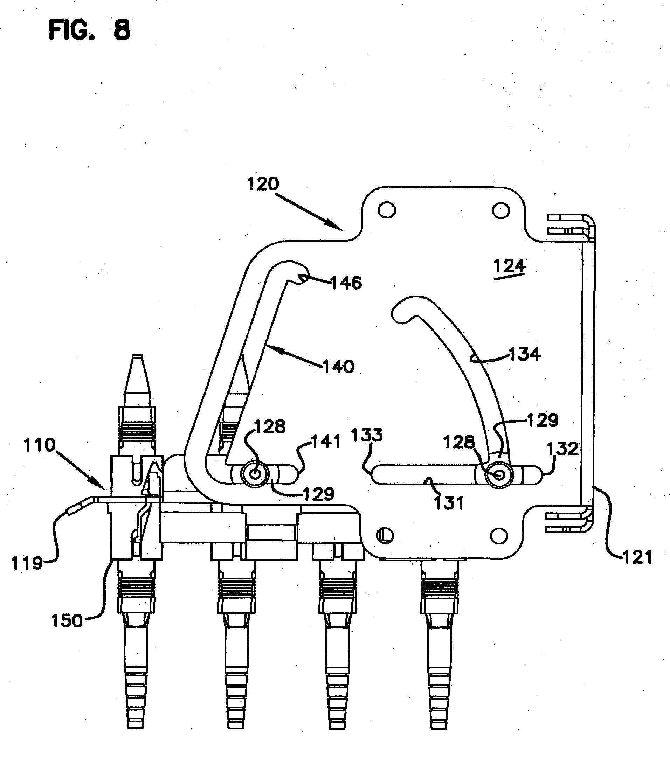

To move the panel arrangement 110 to one of the deflected positions, the panel arrangement 110 is moved forwardly relative to the frame 120. The followers 128 move along the first segments 131, 143 of the channels 130, 140 towards the open side 102 of the panel assembly 100. In some implementations, the panel arrangement 110 is moved forwardly until the followers 128 located closer to the open side 102 engage the detents 146 of the second channels 140 (see FIG. 8). When the open side followers 128 engage the detents 146, the mounting side followers 128 are aligned with the first ends 135 of the second segments 134 of the first channels 130.

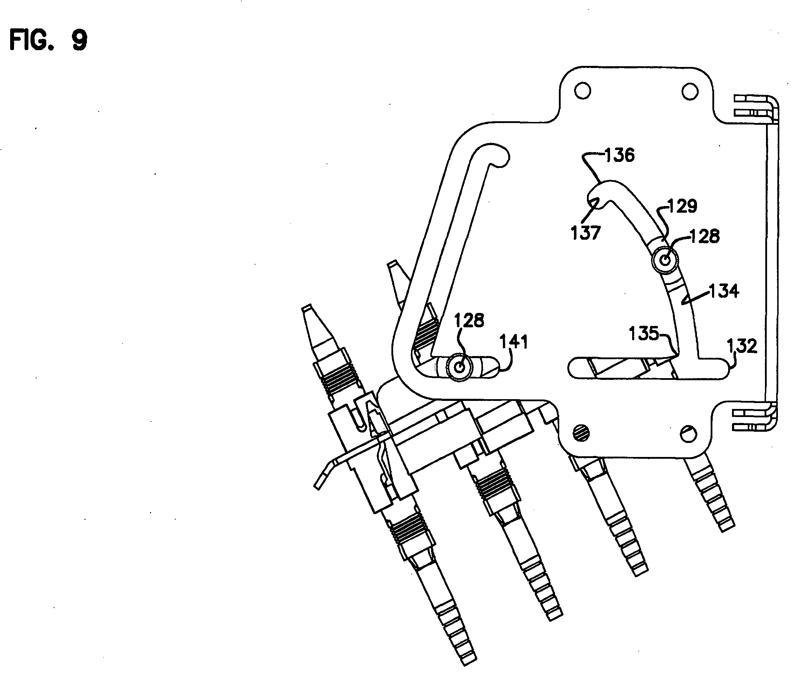

As shown in FIGS. 9 and 10, the panel arrangement 110 moves to the first deflected position by pivoting the panel arrangement 110 along a pivot axis extending through the open side followers 128. In certain implementations, the pivot axis can move along the first segment 143 of the second channel 140. The detents 146 facilitate pivoting the panel arrangement 110 along a majority of a length of the second segment 134 without moving the followers 128 along the first segments 143 of the second channels 140. As the panel arrangement 110 is pivoted, the mounting side followers 128 move along the second segments 134 of the first channels 130 towards the second ends 136 of the second segments 134 (see FIG. 9).

The mounting side followers 128 are moved (e.g., snapped) into the notches 137 at the second ends 136 of the second segments 134 to secure the panel arrangement 110 in the first deflected position. In certain implementations, the open side followers 128 slide along the first segment 143 of the second channel 140 towards the transition 145 to enable the mounting side followers 128 to move into the notches 137. The notches 137 inhibit movement of the mounting side followers 128 back along the second segments 134 of the first channels 130, thereby maintaining the panel arrangement 110 in the first deflected position. Accordingly, the position and orientation of the panel arrangement 110 remains stable as a user plugs and unplugs optical fiber connectors into and from ports accessible from the first side 112 of the main section 111 of the panel arrangement 110.

To release the panel arrangement 110 from the first deflected position, the user pushes upwardly and rearwardly on the panel arrangement 110 to cam each mounting side follower 128 over a hump or curve to move the follower from the notch 137 to the second segment 134 of the first channel 130. Moving the panel arrangement 110 upwardly and rearwardly moves the open side follower 128 along the first segment 143 of the second channel 140 towards the first end 141 of the first channel 140.

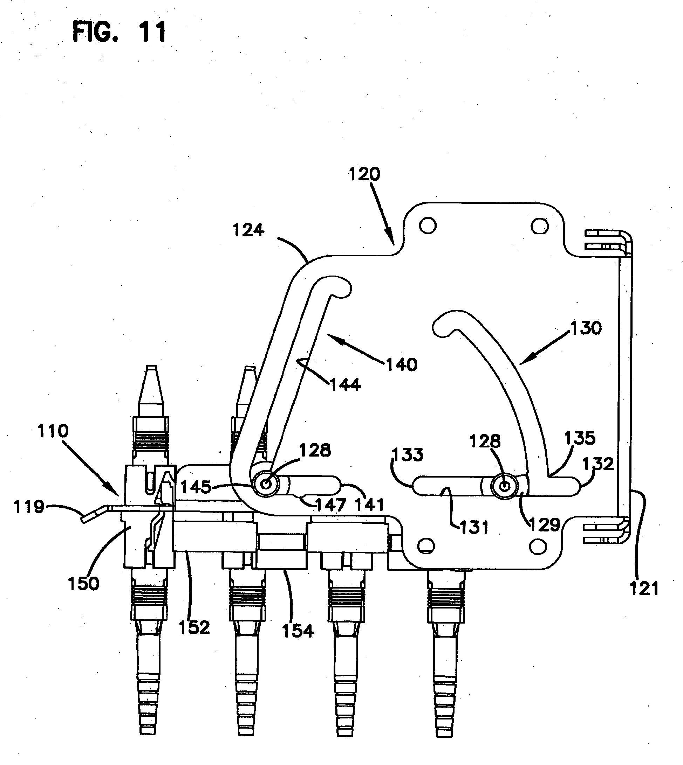

To move the panel arrangement 110 to the second deflected position, the panel arrangement 110 is moved forwardly relative to the base 120 until the open side followers 128 pass the detents 147 and arrive at the transitions 145 of the second channels 140 (see FIG. 11). When the open side followers 128 are at the transitions 145, the mounting side followers 128 are no longer aligned with the first ends 135 of the second segments 134 of the first channels 130. Rather, the mounting side followers 128 are positioned between edges of the first segments 131 of the first channels 130. The open side followers 128 are aligned with the second segments 144 of the second channels 140.

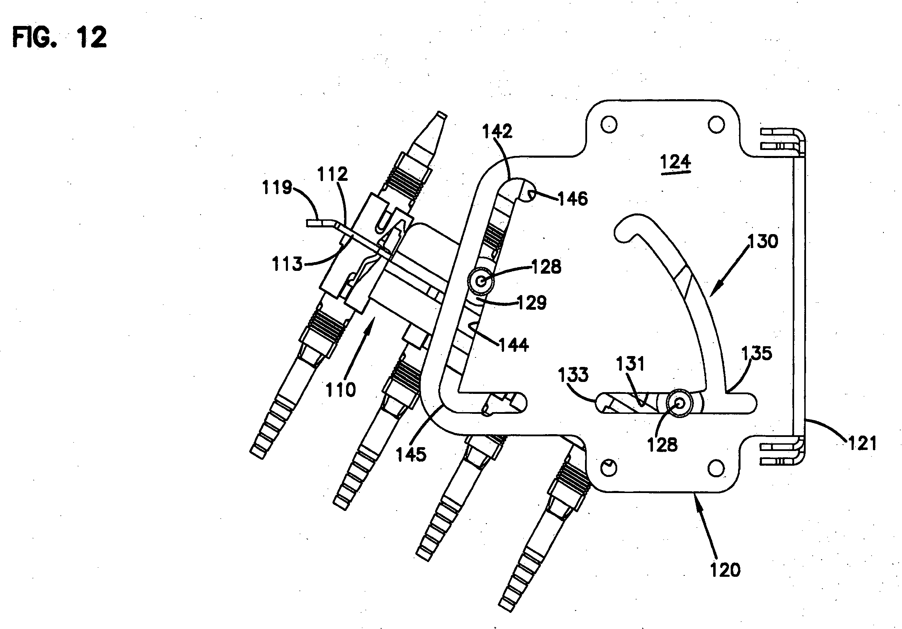

As shown in FIGS. 12 and 13, the panel arrangement 110 moves to the second deflected position by pivoting the panel arrangement 110 along a pivot axis extending through the mounting side followers 128. The edges of the first segments 131 of the first channels 130 prevent upwardly or downward movement of the mounting side followers 128 while pivoting the panel arrangement 110. As the panel arrangement 110 is pivoted, the open side followers 128 move along the second segments 144 of the second channels 140 towards the second ends 146 of the second segments 144 (see FIG. 12).

In certain implementations, the pivot axis can move along the first segment 131 of the first channel 130. For example, in some implementations, the mounting side followers 128 remain laterally fixed within the first segments 131 of the first channels 130 while the open side followers 128 move along a portion of the second segments 144 of the second channels 140. The mounting side followers 128 may slide along the first segments 131 towards the second ends 133 while the open side followers 128 move along another portion of the second segments 144 of the second channels 140 towards the notches 146.

The open side followers 128 are moved (e.g., snapped) into the notches 146 at the second ends 142 of second channel 140 to secure the panel arrangement 110 in the second deflected position (see FIG. 13). The mounting side followers 128 slide along the first segments 131 towards the first ends 132 as the open side followers 128 are moved rearwardly into the notches 146. The notches 146 inhibit movement of the open side followers 128 back along the second segments 144 of the second channels 140, thereby maintaining the panel arrangement 110 in the second deflected position. Accordingly, the position and orientation of the panel arrangement 110 remains stable as a user plugs and unplugs optical fiber connectors into and from ports accessible from the second side 113 of the main section 111 of the panel arrangement 110.

To release the panel arrangement 110 from the second deflected position, the user pulls forwardly on the panel arrangement 110 to cam each open side follower 128 back into alignment with the second segment 144 of the second channel 140. Moving the panel arrangement 110 forwardly moves the mounting side followers 128 forwardly towards the second ends 133 of the first segments 131 of the first channels 130.

FIGS. 14-19 illustrate one example implementation of the panel assembly 100 mounted within an interior 162 of an enclosure 160. Example enclosures 160 include wall boxes, cabinets, pedestals, or other such closures. In the example shown, the panel assembly 100 is mounted to a rear wall 163 of a base 161 of the enclosure 160. In other implementations, the panel assembly 100 also may be mounted to other walls of the base 161 or to a cover of the enclosure 160.

The enclosure 160 defines one or more ports at which optical fibers enter and leave the enclosure 160. One or more feeder fibers/cables 168 enter the enclosure and one or more subscriber fibers/cables exit the enclosure 166. Optical signals from the feeder fibers/cables 168 are carried to ports at the second side 113 of the main section 111 of the panel arrangement 110. The subscriber fibers/cables 166 have connectorized ends plugged into ports at the first side 112 of the main section 111 of the panel arrangement 110.

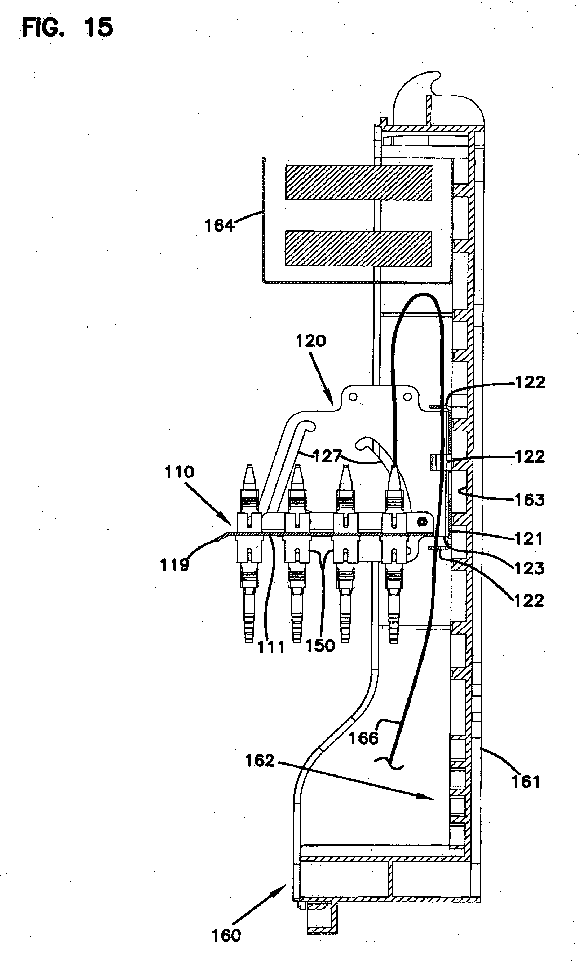

As shown in FIG. 14, the subscriber fibers/cables 166 may be routed upwardly from the first side 112, looped back through the channel defined by the retention fingers 122 of the frame 120, and routed through the gap 123 (see FIG. 15) between the frame 120 and the panel arrangement 110 to extend to ports at the bottom of the enclosure 160. Routing the cables 166 through the gap 123 enhances user access to the panel arrangement 110 through an open front of the enclosure 160 since the subscriber fibers 160 will not block access to the panel arrangement 110. In other implementations, the subscriber fibers/cables 168 may follow other routing paths.

In some implementations, the enclosure 160 holds one or more splitter modules 164 at which the optical signals from the feeder fibers/cables 168 are split onto splitter output pigtails 165, which are routed to the second side 113 of the panel arrangement 110. In other implementations, the subscriber fibers/cables 168 may follow other routing paths. The splitter output pigtails 165 may be routed initially to the connector holders 152 at which the connectorized ends may be stored until needed for service. To provide service to a subscriber, one of the splitter output pigtails 165 is plugged into a port of the appropriate adapter 150 at the second side 113 of the panel arrangement 110. The adapter 150 optically couples the connectorized end of the splitter output pigtail 165 to a connectorized end of the subscriber fiber 166.

In certain implementations, the feeder fibers/cables 168 enter the enclosure 160 and a connectorized end is routed to a port of an interface member 154 at the second side 113 of the panel arrangement 110. A splitter input pigtail may be routed from a port of the interface member 154 at the first side 112 of the panel arrangement 110 to the splitter module 164. In some implementations, the feeder fibers/cables 168 enter the enclosure 160 from a top port, extend downwardly towards the bottom of the enclosure 160, and loop back up to the second side 113 of the panel arrangement 110. In certain implementations, the feeder fibers/cables 168 are organized/secured using the cable management members 167 attached to the panel assembly 100. In other implementations, the feeder fibers/cables 168 enter the enclosure 160 from the bottom of the enclosure 160 and extend upwardly to the second side 113 of the panel arrangement 110. In other implementations, the subscriber fibers/cables 168 may follow other routing paths.

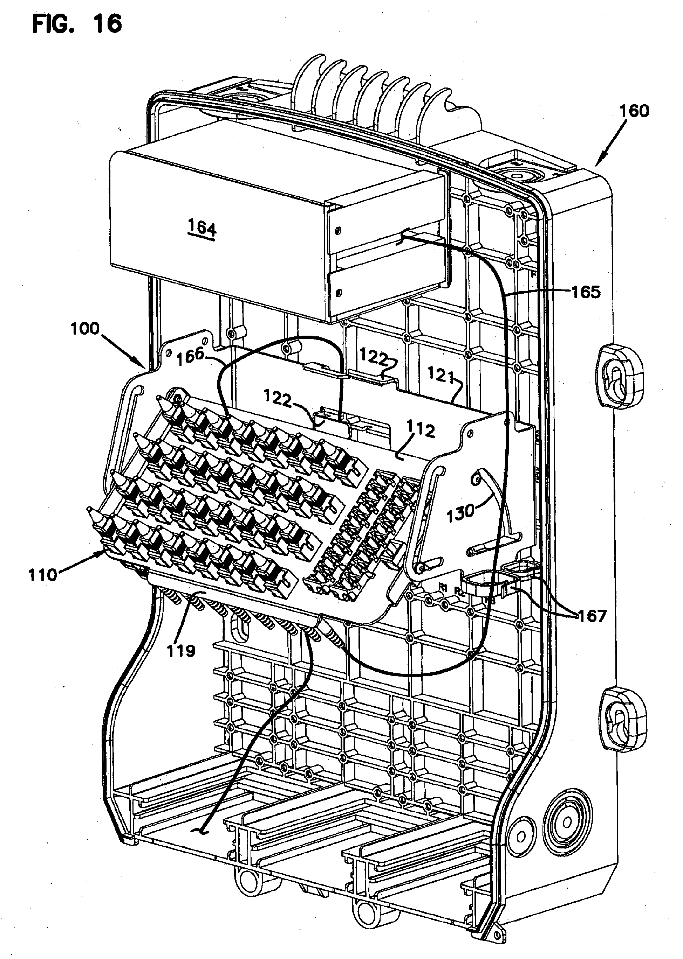

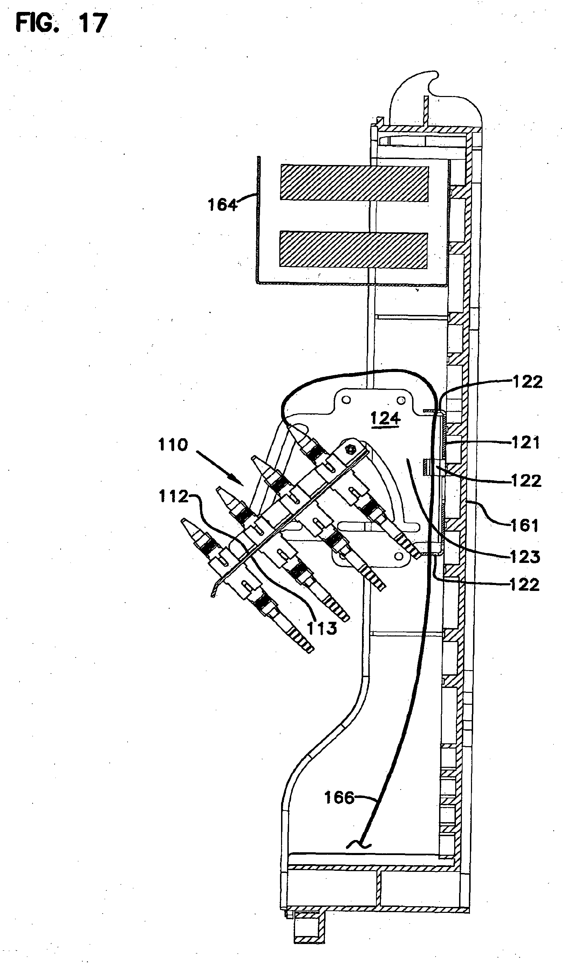

FIGS. 16 and 17 show the enclosure 160 and panel assembly 100 with the panel arrangement 110 in the first deflected position. The panel arrangement 110 is oriented so that the first side 112 of the panel arrangement 110 faces away from the rear wall 163 of the enclosure base 161 to facilitate access to the ports located at the first side 112 of the panel arrangement 110. In the example shown, subscriber fibers 166 are plugged into the ports at the first side 112. Because the first channel 130 extends forwardly towards the open side 102 of the panel assembly 100, the panel arrangement 110 moves away from the mounting section 121 of the frame 120 as the panel arrangement 110 is moved to the first deflected position. Accordingly, the panel arrangement 110 does not pinch the subscriber fibers 166 during movement.

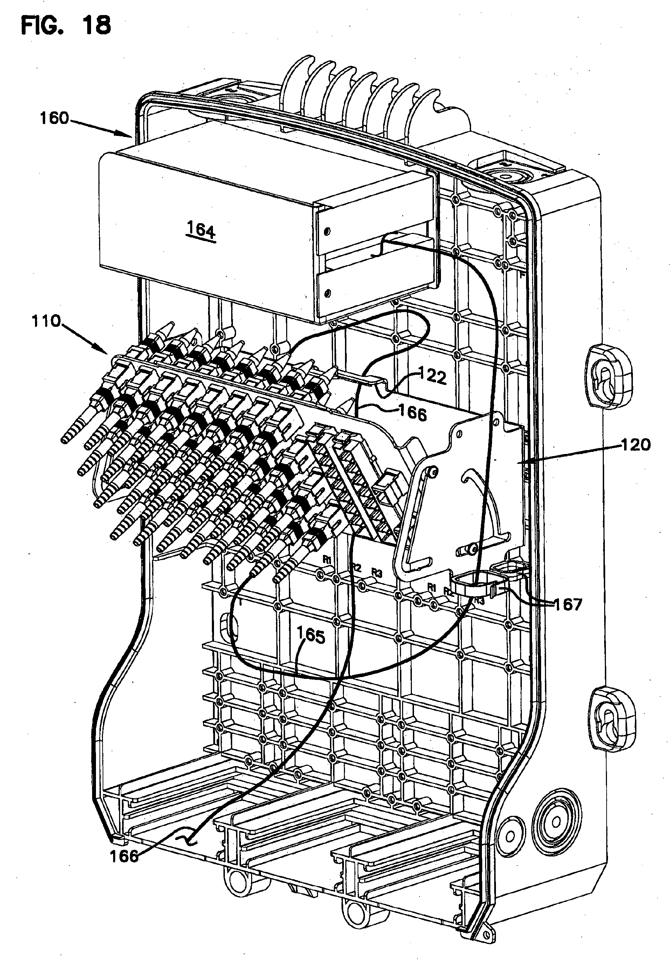

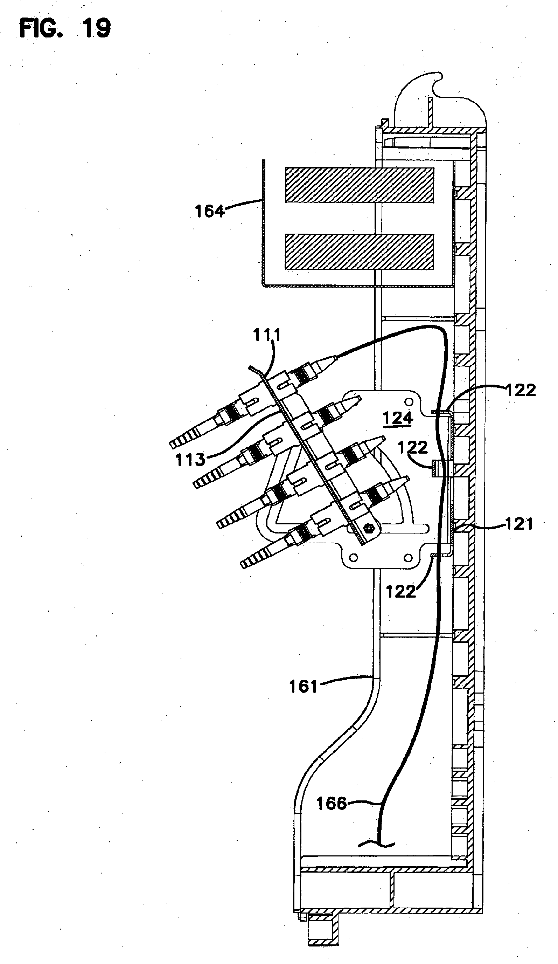

FIGS. 18 and 19 show the enclosure 160 and panel assembly 100 with the panel arrangement 110 in the second deflected position. The panel arrangement 110 is oriented so that the second side 113 of the panel arrangement 110 faces away from the rear wall 163 of the enclosure base 161 to facilitate access to the ports located at the second side 113 of the panel arrangement 110. In the example shown, splitter output fibers 165 are plugged into the ports at the second side 113. Sufficient slack length of the splitter output pigtails 165 is provided in the half-loop storage to accommodate movement of the panel arrangement 110.

As noted above, the subscriber fibers 166 are routed through the gap 123 between the panel arrangement 110 and the frame 120. Moving the panel arrangement 110 to the second deflected position does not pinch the subscriber fibers 166. The followers 128 are pulled forwardly along the first segments 131, 143 of the channels 130, 140 before pivoting the panel arrangement 110. Furthermore, the mounting side followers 128 of the panel arrangement 110 remain stationary within the first channels 130 as the panel arrangement is pivoted to the second deflected position.

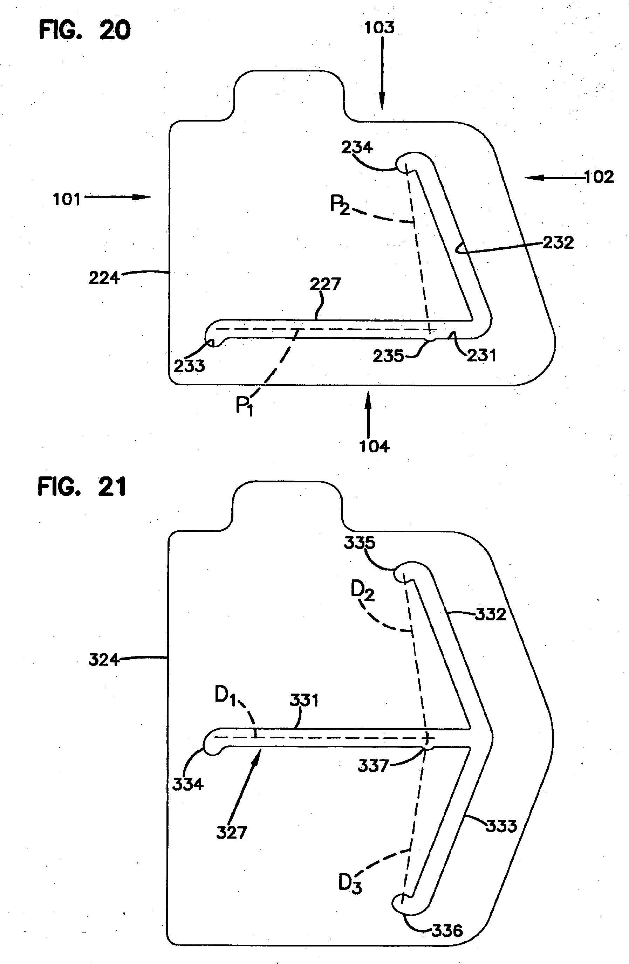

FIGS. 20-22 illustrate alternative channel arrangements suitable for use with the panel arrangement 110. In all three implementations, the channel arrangements in each support wall include single continuous channels that have multiple segments along which the panel followers 128 may slide. In certain implementations, distal ends of each segment define notches that are sized and shaped to retain followers of the panel arrangement. In certain implementations, one or more detents may be formed in the channel segments to aid in retaining a follower 128 of the panel arrangement 110 during pivoting movement of the panel 110 and/or to aid in locking the panel arrangement 110 into position.

FIG. 20 illustrates a support wall 224 defining a channel arrangement 227 that enables deflection of the panel arrangement 110 between a first position P1 and a second position P2. In the first position P1, the panel arrangement 110 is oriented generally horizontally. In the second position P2, the panel arrangement 110 extends generally vertically so that the lower surface 113 of the panel arrangement 110 faces towards the user. In other implementations, the channel arrangement 227 is oriented so that the upper surface 112 of the panel arrangement 110 faces towards the user when the panel arrangement 110 is in the second position P2.

In the example shown, the channel arrangement 227 includes a first channel segment 231 that extends generally horizontally and a second channel segment 232 that extends upwardly from the first channel segment 231. The second channel segment 232 also curves or angles to one side (e.g., the mounting side 101) as the second channel segment 232 extends upwardly. The distal ends of the channel arrangement 227 each define a notch 233, 234 at which a follower of the panel arrangement 110 may be retained. A detent 235 is defined at location on the first channel segment 231.

When the panel arrangement 110 is in the first position P1, a first follower 128 of the panel arrangement 110 would be retained at the notch 233 and a second follower 128 of the panel arrangement 110 would be retained at the detent 235. As the panel arrangement 110 moves to the second position P2, the second follower 128 is transitioned to the second segment 232 and moved towards the distal end 234 of the second segment 232. As the second follower 128 moves along the second segment 232, the panel arrangement 110 pivots about a pivot axis extending through the first follower 128. In certain implementations, the first follower 128 also slides along the first segment 231 as the second follower 128 moves along the second segment 232. The pivot axis slides with the first follower 128. When the panel arrangement 110 is in the second position P2, the first follower 128 seats in the detent 235 and the second follower locks into the second notch 234.

FIG. 21 illustrates a support wall 324 defining a channel arrangement 327 that enables deflection of the panel arrangement 110 between a first position D1, a second position D2, and a third position D3. In the first position D1, the panel arrangement 110 is oriented generally horizontally. In the second position D2, the panel arrangement 110 extends generally vertically so that the lower surface 113 of the panel arrangement 110 faces towards the user. In the third position D3, the upper surface 112 of the panel arrangement 110 faces towards the user.

In the example shown, the channel arrangement 327 includes a first channel segment 331 that extends generally horizontally, a second channel segment 332 that extends upwardly from the first channel segment 331, and a third channel segment 333 that extends downwardly from the first channel segment 331. The second and third channel segments 332, 333 also curve or angle to one side. The distal ends of the channel arrangement 327 each define a notch 334, 335, 336 at which a follower 128 of the panel arrangement 110 may be retained. A detent 337 is defined at location on the first channel segment 331.

When the panel arrangement 110 is in the first position D1, a first follower 128 of the panel arrangement 110 would be retained at the notch 334 and a second follower 128 of the panel arrangement 110 would be retained at the detent 337. As the panel arrangement 110 moves towards the second position D2 or towards the third position D3, the second follower 128 is transitioned to either the second segment 332 or the third segment 333 and moved towards the distal end 335, 336 thereof. As the second follower 128 moves along the second or third segment 332, 333, the panel arrangement 110 pivots about a pivot axis extending through the first follower 128. In certain implementations, the first follower 128 also slides along the first segment 331 as the second follower 128 moves along the second or third segment 332, 333. The pivot axis slides with the first follower 128. When the panel arrangement 110 is in the second position D2 or third position D3, the first follower 128 seats in the detent 337 and the second follower locks into the respective notch 335, 336.

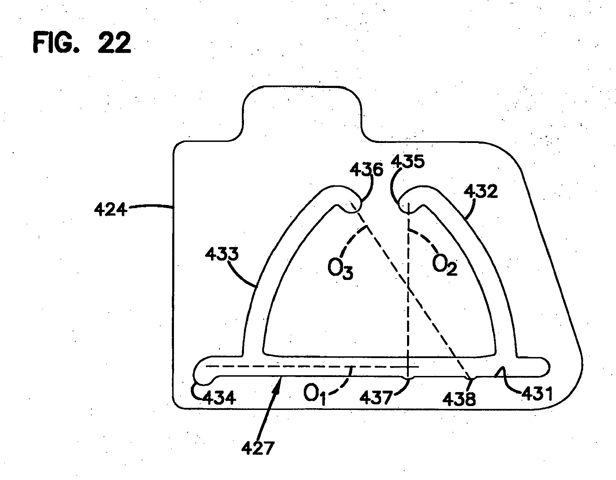

FIG. 22 illustrates a support wall 424 defining a channel arrangement 427 that enables deflection of the panel arrangement 110 between a first position O1, a second position 02, and a third position 03. In the first position O1, the panel arrangement 110 is oriented generally horizontally. In the second position 02, the panel arrangement 110 extends generally vertically so that the lower surface 113 of the panel arrangement 110 faces towards the user. In the third position 03, the upper surface 112 of the panel arrangement 110 faces towards the user.

In the example shown, the channel arrangement 427 includes a first channel segment 431 that extends generally horizontally, a second channel segment 432 that extends upwardly from the first channel segment 331, and a third channel segment 333 that extends downwardly from the first channel segment 331. The second and third channel segments 332, 333 also curve or angle towards opposite sides. The distal ends of the channel arrangement 427 each define a notch 434, 435, 436 at which a follower 128 of the panel arrangement 110 may be retained. One or more detents 437, 438 may be defined at locations along the first channel segment 431. In the example shown, the channel arrangement 427 is substantially similar to the channel arrangement 127 but with the first and second channels 130, 140 connected together.

When the panel arrangement 110 is in the first position O1, a first follower 128 of the panel arrangement 110 would be retained at the notch 434 and a second follower 128 of the panel arrangement 110 would be retained at the detent 437. As the panel arrangement 110 moves to the second position 02, the second follower 128 is transitioned to the second segment 432 and moved towards the distal end 435 of the second segment 432. As the second follower 128 moves along the second segment 432, the panel arrangement 110 pivots about a pivot axis extending through the first follower 128. In certain implementations, the first follower 128 also slides along the first segment 431 as the second follower 128 moves along the second segment 432. The pivot axis slides with the first follower 128. The first follower 128 may snap into the first detent 437 to aid in pivoting the panel arrangement 110 and/or to aid in securing the panel arrangement in the second position 02.

As the panel arrangement 110 moves to the third position 03, the first follower 128 is transitioned from the first segment 431 to the third segment 433 and moved towards the distal end 436 of the third segment 433. As the first follower 128 moves along the third segment 433, the panel arrangement 110 pivots about a pivot axis extending through the second follower 128. In certain implementations, the second follower 128 also slides along the first segment 431 as the first follower 128 moves along the third segment 433. The pivot axis slides with the second follower 128. The second follower 128 may snap into the second detent 438 to aid in pivoting the panel arrangement 110 and/or to aid in securing the panel arrangement in the third position 03.

Examples of various inventive aspects of the present disclosure have been described herein. It will be appreciated that modifications and equivalents of the disclosed inventive aspects are intended to be included within the broad scope of the present disclosure.

One aspect of the invention includes a panel assembly 100 comprising:
a panel arrangement 110 extending from a first end to a second end, panel arrangement 110 including a first follower 128 and a second follower 128 at each end of the panel arrangement 110;
a first support wall 124A, 224, 324, 424 defining a first channel arrangement 127, 227, 327, 427 that is configured to engage with the first and second followers 128 extending from the first end of the panel arrangement 110, the first channel arrangement 127, 227, 327, 427 including a first channel segment 143, 231, 331, 431 extending between a first distal end and a transition, the first channel arrangement 127, 227, 327, 427 also including a second channel segment 134, 232, 332, 333, 432, 433 extending in a different direction than the first channel segment 143, 231, 331, 431, the first channel segment 143, 231, 331, 431 defining a detent 147, 235, 337, 437, 438 at a location intermediate the first distal end and the transition; and
a second support wall 124B defining a second channel arrangement 127 that is configured to engage with the first and second followers 128 extending from the second end of the panel arrangement 110, the second support wall 124B being laterally aligned with the first support wall 124A, the second channel arrangement 127 being a mirror image of the first channel arrangement 127.

The panel assembly 100 may further include features wherein the first channel segment 231, 331, 431 connects to the second channel segment 232, 332, 333, 432, 433 at the transition.

The panel assembly 100 may further include features wherein the first channel segment 134 does not connect to the second channel segment 143.

The panel assembly 100 may further include features wherein each channel arrangement 127 also includes a third channel segment 144, 333, 433 that extends in a different direction than the first channel segment 143, 331, 431 and the second channel segment 134, 332, 333, 432, 433.

The panel assembly 100 may further include features wherein a distal end of the second channel segment 134, 332, 333, 432, 433 and a distal end of the third channel segment 144, 333, 433 are closer together than proximal ends of the second and third channel segments.

Another aspect of the invention includes a panel assembly 100 comprising:
a frame 120 including two support walls 124, each of the support wall 124 defining a channel arrangement 127, each channel arrangement 127 including a first channel 130 and a second channel 140 that is separated from the first channel 130; and
a panel arrangement 110 extending between first and second mounting sections 114, each mounting section 114 being coupled to one of the side flanges 124 of the frame 120 via first and second followers 128, the first follower 128 of each mounting section 114 engaging the first channel 130 of the respective support wall 124 and the second follower 128 of each mounting section 114 engaging the second channel 140 of the respective side flange 124;
wherein the panel arrangement 110 is moveable relative to the frame 120 between at least an undeflected position and a first deflected position by moving the followers within the channel arrangements 127.

The panel assembly 100 may further include features wherein the panel arrangement 110 also is moveable to a second deflected position that is different from the first deflected position and the undeflected position.

The panel assembly 100 may further include features wherein the panel arrangement 110 pivots about an axis extending through the first followers 128 when the panel arrangement 110 is moved to the first deflected position.

The panel assembly 100 may further include features wherein the panel arrangement 110 pivots about an axis extending through the second followers 128 when the panel arrangement 110 is moved to the second deflected position.

The panel assembly 100 may further include features wherein each channel 130, 140 includes a first segment 131, 143 and a second segment 134, 144, wherein the first followers 128 of the panel arrangement 110 move along the second segments 134 of the first channels 130 when the panel arrangement 110 is moved to the first deflected position.

The panel assembly 100 may further include features wherein the second followers 128 of the panel arrangement 110 move along the second segments 144 of the second channels 140 when the panel arrangement 110 is moved to the second deflected position.

The panel assembly 100 may further include features wherein a notch 137, 146 is defined at the second end 136, 142 of the second segment 134, 144 of each channel 130, 140, wherein the panel arrangement 110 is locked from moving relative to the frame 120 when at least two of the followers 128 engage two of the notches 137, 146.

The panel assembly 100 may further include features wherein a detent 147 is provided at a channel edge of the first segment 143 of the second channel 140.

The panel assembly 100 may further include features, wherein the channels 130, 140 are configured to inhibit deflection of the panel arrangement 110 relative to the base 120 when the panel arrangement 110 is located at a first lateral position relative to the mounting section 121 of the base 120.

The panel assembly 100 may further include features wherein each follower 128 includes a post sized to extend through the respective channel 130, 14 and a head sized to engage the respective support wall 124 of the frame 120.

The panel assembly 100 may further include features wherein the frame 120 includes a mounting section 121 and wherein the support walls 124 include side flanges extending from opposite ends of the mounting section 121 of the frame 120.

A further aspect of the invention includes a panel assembly 100 comprising:
a frame 120 including two side flanges 124 extending between opposite ends of a mounting section 121, each of the side flanges 124 defining a channel arrangement 127, 227, 327, 427, the mounting section 121 including retention fingers 122 that define a management passage; and
a panel arrangement 110 mounted to the frame 120 to move between at least an undeflected position and a first deflected position, the panel arrangement 110 extending from a first end to a second end and from a first edge to a second edge, the first edge of the panel arrangement 110 facing the mounting section 121 of the frame 120 and the second edge of the panel arrangement 110 facing away from the mounting section 121 of the frame 120, the panel arrangement 110 including at least one follower 128 extending from each end towards one of the side flanges 124 of the frame 120, each follower 128 engaging the channel arrangement 127, 227, 327, 427 of the respective side flange 124, wherein a gap 123 is maintained between the first edge of the panel arrangement 110 and the mounting section 121 of the frame 120 throughout movement of the panel arrangement 110 between the undeflected position and the first deflected position.

The panel assembly may further include features wherein the panel arrangement 110 includes a main section 111 and two mounting sections 114, each of the mounting sections 114 defining one of the ends of the panel arrangement 110, the main section 111 defining the first and second edges of the panel arrangement 110, the main section 111 also defining a first major surface 112 and an opposite second major surface 113 that extend between the first and second ends and the first and second edges.

The panel assembly may further include features wherein the panel arrangement 110 extends generally orthogonally to the mounting section 121 of the frame 120 when the panel arrangement 110 is in the undeflected position.

The panel assembly may further include features wherein the panel arrangement 110 is oriented at an angle relative to the mounting section 121 of the frame 120, wherein the angle is greater than 0 and less than 90°.

The panel assembly may further include features wherein the angle ranges between 30° and 70°.

The panel assembly may further include features wherein the angle ranges between 40° and 60°.

The panel assembly may further include features wherein the first major surface 112 of the main section 111 of the panel arrangement 110 faces away from the mounting section 121 when the panel arrangement 110 is in the first deflected position.

The panel assembly may further include features wherein the second major surface 113 of the main section 111 of the panel arrangement 110 faces away from the mounting section 121 when the panel arrangement 110 is in the first deflected position.

The panel assembly may further include features wherein each channel arrangement 127, 227, 327, 427 includes a first channel 130 and a second channel 140.

The panel assembly may further include features wherein each channel arrangement 127, 327, 427 is configured to enable deflection of the panel arrangement 110 to a second deflected position that is different from the first deflected position and the undeflected position.

Another aspect of the invention relates to a method of accessing a termination field provided on a panel 110 mounted to a frame 120, the method comprising:
pulling the panel 110 away from a mounting section 121 of the frame 120 so that a first follower 128 of the panel arrangement 110 moves along a first channel 130 and a second follower 128 of the panel arrangement 110 moves along a second channel 140 in a first direction;
continuing to pull the panel 110 away from the mounting section 121 until the first follower 128 of the panel 110 aligns with a channel segment 134 of the first channel 130 and the second follower 128 engages a detent 147 of the second channel 140; and
pivoting the panel arrangement 110 about a pivot axis that extends along the second follower 128 and moving the first follower 128 through the channel segment 134 of the first channel 130 in a second direction that is different from the first direction.

Another aspect of the invention relates to a method of accessing a termination field provided on a panel 110 mounted to a frame 120, the method comprising:
pulling the panel 110 away from a mounting section 121 of the frame 120 so that a first follower 128 of the panel arrangement 110 moves along a first channel 130 and passes a channel segment 134 of the first channel 130 and a second follower 128 of the panel arrangement 110 moves along a second channel 140 and passes a detent 147 of the second channel 140;
continuing to pull the panel 110 away from the mounting section 121 until the second follower 128 reaches a transition 145 between first and second segments 143, 144 of the second channel 140; and
pivoting the panel arrangement 110 about a pivot axis that extends along the first follower 128 and moving the second follower 128 through the second segment 144 of the second channel 140.

Another aspect of the invention includes an enclosure 160 comprising:
a base 161 having a top, a bottom, a first side, and a second side, the base 161 including at least a first wall 163 extending between the top and the bottom and between the first and second sides, the base 161 also defining an open front; and
a panel assembly 100 mounted to the first wall 163 of the base 161, the panel assembly 100 including a frame 120 and a panel arrangement 110 that is configured to hold telecommunications components 150, 152, 154, the panel arrangement 110 having a first major surface 112 from which first ports of the telecommunications components 150, 152, 154 are accessible and a second major surface 113 from which second ports of the telecommunications components 150, 152, 154 are accessible, the panel arrangement 110 being configured to move relative to the frame 120 between an undeflected position, a first deflected position, and a second deflected position,
wherein the first maj or surface 112 of the panel arrangement 110 faces the top of the base 161 when the panel arrangement 110 is in the undeflected position; and wherein the first major surface 112 of the panel arrangement 110 faces at least partially towards the open front of the base 161 when the panel arrangement 110 is in the first deflected position.

The enclosure 160 may further include features further comprising at least one splitter module 164 mounted to the base 161.

The enclosure 160 may further include features wherein the ports at the first side 112 of the panel arrangement 110 are formed by optical adapters 150.

The enclosure 160 may further include features wherein at least some of the ports at the second side 113 of the panel arrangement 110 are formed by optical adapters 150.

The enclosure 160 may further include features wherein at least some of the ports at the second side 113 of the panel arrangement 110 are formed by connector holders 152.

The enclosure 160 may further include features wherein subscriber fibers are routed within the enclosure 160 to extend through a gap 123 between the panel arrangement 110 and the frame 120, through a passage defined by retention fingers 122 of the frame 120, and looped back towards the first major surface 112 of the panel arrangement 110.

The enclosure 160 may further include features wherein splitter output fibers are routed within the enclosure 160 to extend away from the splitter module 164, past the panel assembly 100, and back to the second major surface 113 of the panel arrangement 110.

### List of Reference Numerals and Corresponding Features

- 100: panel assembly
- 101: mounting side
- 102: open side
- 103: first side
- 104: second side
- 105: first end
- 106: second end
- 110: panel arrangement
- 111: main section
- 112: first surface
- 113: second surface
- 114: mounting flanges
- 115: follower wells
- 116: adapter apertures
- 117: holder aperture
- 118: interface aperture
- 119: handle
- 120: frame
- 121: mounting section
- 122: aperture
- 123: retention fingers
- 124: side flange
- 125: tab
- 126: fastening apertures
- 127: guide channels
- 128: followers
- 129: washers
- 130: first channel
- 131: first segment
- 132: first end
- 133: second end
- 134: second segment
- 135: first end
- 136: second end
- 137: notch
- 140: second channel
- 141: first end
- 142: second end
- 143: first segment
- 144: second segment
- 145: transition
- 146: notch
- 147: detent
- 150: optical adapters
- 152: connector holders
- 154: interface member
- 160: enclosure
- 161: base
- 162: interior
- 163: rear wall
- 164: optical splitter
- 165: splitter output pigtails
- 166: subscriber fibers
- 167: management member
- 168: feeder fiber
- 224: support flange
- 227: channel arrangement
- 231: first channel segment
- 232: second channel segment
- 233: distal end notch
- 234: distal end notch
- 235: detent
- 324: support flange
- 327: channel arrangement
- 331: first channel segment
- 332: second channel segment
- 333: third channel segment
- 334: distal end notch
- 335: distal end notch
- 336: distal end notch
- 337: detent
- 424: support flange
- 427: channel arrangement
- 431: first channel segment
- 432: second channel segment
- 433: third channel segment
- 434: distal end notch
- 435: distal end notch
- 436: distal end notch
- 437: first detent
- 438: second detent
- P1, D1, O1: first position
- P2, D2, O2: second position
- D3, O3: third position

## Claims

1. A telecommunications panel assembly (100) comprising:
a frame (120) including two support walls (124) and a panel arrangement (110) extending between first and second mounting sections (114), each mounting section (114) being coupled to one of the side flanges (124) of the frame (120),
**characterized in that**,
each of the support wall (124) defining a channel arrangement (127), each channel arrangement (127) including a first channel (130) and a second channel (140) that is separated from the first channel (130);
each mounting section (114) being coupled to one of the side flanges (124) of the frame (120) via first and second followers (128), the first follower (128) of each mounting section (114) engaging the first channel (130) of the respective support wall (124) and the second follower (128) of each mounting section (114) engaging the second channel (140) of the respective side flange (124);
wherein the panel arrangement (110) is moveable relative to the frame (120) between at least an undeflected position and a first deflected position by moving the followers within the channel arrangements (127).

2. The panel assembly (100) of claim 1, wherein the panel arrangement (110) also is moveable to a second deflected position that is different from the first deflected position and the undeflected position.

3. The panel assembly (100) of any of claims 1 and 2, wherein the panel arrangement (110) pivots about an axis extending through the first followers (128) when the panel arrangement (110) is moved to the first deflected position.

4. The panel assembly (100) of any of claims 1-3, wherein the panel arrangement (110) pivots about an axis extending through the second followers (128) when the panel arrangement (110) is moved to the second deflected position.

5. The panel assembly (100) of any of claims 1-4, wherein each channel (130, 140) includes a first segment (131, 143) and a second segment (134, 144), wherein the first followers (128) of the panel arrangement (110) move along the second segments (134) of the first channels (130) when the panel arrangement (110) is moved to the first deflected position.

6. The panel assembly (100) of claim 5, wherein the second followers (128) of the panel arrangement (110) move along the second segments (144) of the second channels (140) when the panel arrangement (110) is moved to the second deflected position.

7. The panel assembly (100) of any of claims 5 and 6, wherein a notch (137, 146) is defined at the second end (136, 142) of the second segment (134, 144) of each channel (130, 140), wherein the panel arrangement (110) is locked from moving relative to the frame (120) when at least two of the followers (128) engage two of the notches (137, 146).

8. The panel assembly (100) of any of claims 5-7, wherein a detent (147) is provided at a channel edge of the first segment (143) of the second channel (140).

9. The panel assembly (100) of any of claims 1-8, wherein the channels (130, 140) are configured to inhibit deflection of the panel arrangement (110) relative to the base (120) when the panel arrangement (110) is located at a first lateral position relative to the mounting section (121) of the base (120).

10. The panel assembly (100) of any of claims 1-8, wherein each follower (128) includes a post sized to extend through the respective channel (130, 14) and a head sized to engage the respective support wall (124) of the frame (120).

11. The panel assembly (100) of any of claims 1-8, wherein the frame (120) includes a mounting section (121) and wherein the support walls (124) include side flanges extending from opposite ends of the mounting section (121) of the frame (120).

12. The panel assembly (100) of any of claims 1-11 comprising:
a panel arrangement (110) extending from a first end to a second end, panel arrangement (110) including a first follower (128) and a second follower (128) at each end of the panel arrangement (110);
a first support wall (124A, 224, 324, 424) defining a first channel arrangement (127, 227, 327, 427) that is configured to engage with the first and second followers (128) extending from the first end of the panel arrangement (110), the first channel arrangement (127, 227, 327, 427) including a first channel segment (143, 231, 331, 431) extending between a first distal end and a transition, the first channel arrangement (127, 227, 327, 427) also including a second channel segment (134, 232, 332, 333, 432, 433) extending in a different direction than the first channel segment (143, 231, 331, 431), the first channel segment (143, 231, 331, 431) defining a detent (147, 235, 337, 437, 438) at a location intermediate the first distal end and the transition; and
a second support wall (124B) defining a second channel arrangement (127) that is configured to engage with the first and second followers (128) extending from the second end of the panel arrangement (110), the second support wall (124B) being laterally aligned with the first support wall (124A), the second channel arrangement (127) being a mirror image of the first channel arrangement (127).

13. The panel assembly (100) of claims 1-12, comprising:
a frame (120) including two side flanges (124) extending between opposite ends of a mounting section (121), each of the side flanges (124) defining a channel arrangement (127, 227, 327, 427), the mounting section (121) including retention fingers (122) that define a management passage; and
a panel arrangement (110) mounted to the frame (120) to move between at least an undeflected position and a first deflected position, the panel arrangement (110) extending from a first end to a second end and from a first edge to a second edge, the first edge of the panel arrangement (110) facing the mounting section (121) of the frame (120) and the second edge of the panel arrangement (110) facing away from the mounting section (121) of the frame (120), the panel arrangement (110) including at least one follower (128) extending from each end towards one of the side flanges (124) of the frame (120), each follower (128) engaging the channel arrangement (127, 227, 327, 427) of the respective side flange (124), wherein a gap (123) is maintained between the first edge of the panel arrangement (110) and the mounting section (121) of the frame (120) throughout movement of the panel arrangement (110) between the undeflected position and the first deflected position.

14. An enclosure (160) including the panel assembly (100) of claims 1-13 comprising:
a base (161) having a top, a bottom, a first side, and a second side, the base (161) including at least a first wall (163) extending between the top and the bottom and between the first and second sides, the base (161) also defining an open front; and
a panel assembly (100) mounted to the first wall (163) of the base (161), the panel assembly (100) including a frame (120) and a panel arrangement (110) that is configured to hold telecommunications components (150, 152, 154), the panel arrangement (110) having a first major surface (112) from which first ports of the telecommunications components (150, 152, 154) are accessible and a second major surface (113) from which second ports of the telecommunications components (150, 152, 154) are accessible, the panel arrangement (110) being configured to move relative to the frame (120) between an undeflected position, a first deflected position, and a second deflected position,
wherein the first major surface (112) of the panel arrangement (110) faces the top of the base (161) when the panel arrangement (110) is in the undeflected position; and wherein the first major surface (112) of the panel arrangement (110) faces at least partially towards the open front of the base (161) when the panel arrangement (110) is in the first deflected position.

15. A method of accessing a termination field provided on a panel (110) of a telecommunications panel assembly, the panel being mounted to a frame (120), the method comprising:
pulling the panel (110) away from a mounting section (121) of the frame (120) so that a first follower (128) of the panel arrangement (110) moves along a first channel (130) and a second follower (128) of the panel arrangement (110) moves along a second channel (140) in a first direction;
continuing to pull the panel (110) away from the mounting section (121) until the first follower (128) of the panel (110) aligns with a channel segment (134) of the first channel (130) and the second follower (128) engages a detent (147) of the second channel (140); and
pivoting the panel arrangement (110) about a pivot axis that extends along the second follower (128) and moving the first follower (128) through the channel segment (134) of the first channel (130) in a second direction that is different from the first direction.

16. A method of accessing a termination field provided on a panel (110) of a telecommunications panel assembly, the panel being mounted to a frame (120), the method comprising:
pulling the panel (110) away from a mounting section (121) of the frame (120) so that a first follower (128) of the panel arrangement (110) moves along a first channel (130) and passes a channel segment (134) of the first channel (130) and a second follower (128) of the panel arrangement (110) moves along a second channel (140) and passes a detent (147) of the second channel (140);
continuing to pull the panel (110) away from the mounting section (121) until the second follower (128) reaches a transition (145) between first and second segments (143, 144) of the second channel (140); and
pivoting the panel arrangement (110) about a pivot axis that extends along the first follower (128) and moving the second follower (128) through the second segment (144) of the second channel (140).

## Patentansprüche

1. Telekommunikationsplattenbaugruppe (100), die aufweist:
einen Rahmen (120), der zwei Stützwände (124) und eine Plattenanordnung (110) umfasst, die sich zwischen einem ersten und zweiten Montageabschnitt (114) erstreckt, wobei ein jeder Montageabschnitt (114) mit einem der Seitenflansche (124) des Rahmens (120) verbunden ist,
**dadurch gekennzeichnet, dass**
eine jede der Stützwände (124) eine Kanalanordnung (127) definiert, wobei eine jede Kanalanordnung (127) einen ersten Kanal (130) und einen zweiten Kanal (140) umfasst, der vom ersten Kanal (130) getrennt ist;
wobei ein jeder Montageabschnitt (114) mit einem der Seitenflansche (124) des Rahmens (120) mittels erster und zweiter Eingriffsglieder (128) verbunden wird, wobei das erste Eingriffsglied (128) eines jeden Montageabschnittes (114) mit dem ersten Kanal (130) der jeweiligen Stützwand (124) und das zweite Eingriffsglied (128) eines jeden Montageabschnittes (114) mit dem zweiten Kanal (140) des jeweiligen Seitenflansches (124) in Eingriff kommt;
wobei die Plattenanordnung (110) relativ zum Rahmen (120) zwischen mindestens einer nicht abgelenkten Position und einer ersten abgelenkten Position beweglich ist, indem die Eingriffsglieder innerhalb der Kanalanordnungen (127) bewegt werden.

2. Plattenbaugruppe (100) nach Anspruch 1, bei der die Plattenanordnung (110) ebenfalls in eine zweite abgelenkte Position beweglich ist, die von der ersten abgelenkten Position und der nicht abgelenkten Position verschieden ist.

3. Plattenbaugruppe (100) nach einem der Ansprüche 1 und 2, bei der sich die Plattenanordnung (110) um eine Achse dreht, die sich durch die ersten Eingriffsglieder (128) erstreckt, wenn die Plattenanordnung (110) in die erste abgelenkte Position bewegt wird.

4. Plattenbaugruppe (100) nach einem der Ansprüche 1 bis 3, bei der sich die Plattenanordnung (110) um eine Achse dreht, die sich durch die zweiten Eingriffsglieder (128) erstreckt, wenn die Plattenanordnung (110) in die zweite abgelenkte Position bewegt wird.

5. Plattenbaugruppe (100) nach einem der Ansprüche 1 bis 4, bei der ein jeder Kanal (130, 140) ein erstes Segment (131, 143) und ein zweites Segment (134, 144) umfasst, wobei sich die ersten Eingriffsglieder (128) der Plattenanordnung (110) entlang der zweiten Segmente (134) der ersten Kanäle (130) bewegen, wenn die Plattenanordnung (110) in die erste abgelenkte Position bewegt wird.

6. Plattenbaugruppe (100) nach Anspruch 5, bei der sich die zweiten Eingriffsglieder (128) der Plattenanordnung (110) entlang der zweiten Segmente (144) der zweiten Kanäle (140) bewegen, wenn die Plattenanordnung (110) in die zweite abgelenkte Position bewegt wird.

7. Plattenbaugruppe (100) nach einem der Ansprüche 5 oder 6, bei der eine Kerbe (137, 146) am zweiten Ende (136, 142) des zweiten Segmentes (134, 144) eines jeden Kanals (130, 140) definiert wird, in der die Plattenanordnung (110) gegen eine Bewegung relativ zum Rahmen (120) verriegelt wird, wenn mindestens zwei der Eingriffsglieder (128) mit zwei der Kerben (137, 146) in Eingriff kommen.

8. Plattenbaugruppe (100) nach einem der Ansprüche 5 bis 7, bei der eine Arretierung (147) an einem Kanalrand des ersten Segmentes (143) des zweiten Kanals (140) vorhanden ist.

9. Plattenbaugruppe (100) nach einem der Ansprüche 1 bis 8, bei der die Kanäle (130, 140) ausgebildet sind, um eine Ablenkung der Plattenanordnung (110) relativ zur Basis (120) zu verhindern, wenn die Plattenanordnung (110) in einer ersten seitlichen Position relativ zum Montageabschnitt (121) der Basis (120) angeordnet wird.

10. Plattenbaugruppe (100) nach einem der Ansprüche 1 bis 8, bei der ein jedes Eingriffsglied (128) einen Stift, der bemessen ist, um sich durch den jeweiligen Kanal (130, 140) zu erstrecken, und einen Kopf umfasst, der bemessen ist, um mit der jeweiligen Stützwand (124) des Rahmens (120) in Eingriff zu kommen.

11. Plattenbaugruppe (100) nach einem der Ansprüche 1 bis 8, bei der der Rahmen (120) einen Montageabschnitt (121) umfasst, und bei der die Stützwände (124) Seitenflansche umfassen, die sich von entgegengesetzten Enden des Montageabschnittes (121) des Rahmens (120) aus erstrecken.

12. Plattenbaugruppe (100) nach einem der Ansprüche 1 bis 11, die aufweist:
eine Plattenanordnung (110), die sich von einem ersten Ende zu einem zweiten Ende erstreckt, wobei die Plattenanordnung (110) ein erstes Eingriffsglied (128) und ein zweites Eingriffsglied (128) an jedem Ende der Plattenanordnung (110) umfasst;
eine erste Stützwand (124A, 224, 324, 424), die eine erste Kanalanordnung (127, 227, 327, 427) definiert, die ausgebildet ist, um mit dem ersten und zweiten Eingriffsglied (128) in Eingriff zu kommen, die sich vom ersten Ende der Plattenanordnung (110) aus erstrecken, wobei die erste Kanalanordnung (127, 227, 327, 427) ein erstes Kanalsegment (143, 231, 331, 431) umfasst, das sich zwischen einem ersten distalen Ende und einem Übergang erstreckt, wobei die erste Kanalanordnung (127, 227, 327, 427) ebenfalls ein zweites Kanalsegment (134, 232, 332, 333, 432, 433) umfasst, das sich in einer anderen Richtung als das erste Kanalsegment (143, 231, 331, 431) erstreckt, wobei das erste Kanalsegment (143, 231, 331, 431) eine Arretierung (147, 235, 337, 437, 438) an einer Stelle zwischen dem ersten distalen Ende und dem Übergang definiert; und
eine zweite Stützwand (124B), die eine zweite Kanalanordnung (127) definiert, die ausgebildet ist, um mit dem ersten und zweiten Eingriffsglied (128) in Eingriff zu kommen, die sich vom zweiten Ende der Plattenanordnung (110) aus erstrecken, wobei die zweite Stützwand (124B) seitlich mit der ersten Stützwand (124A) ausgerichtet ist, wobei die zweite Kanalordnung (127) ein Spiegelbild der ersten Kanalanordnung (127) ist.

13. Plattenbaugruppe (100) nach Ansprüchen 1 bis 12, die aufweist:
einen Rahmen (120), der zwei Seitenflansche (124) umfasst, die sich zwischen entgegengesetzten Enden eines Montageabschnittes (121) erstrecken, wobei ein jeder der Seitenflansche (124) eine Kanalanordnung (127, 227, 327, 427) definiert, wobei der Montageabschnitt (121) Arretierfinger (122) umfasst, die einen Betriebsdurchgang definieren; und
eine Plattenanordnung (110), die am Rahmen (120) montiert ist, um sich zwischen mindestens einer nicht abgelenkten Position und einer ersten abgelenkten Position zu bewegen, wobei sich die Plattenanordnung (110) von einem ersten Ende zu einem zweiten Ende und von einem ersten Rand zu einem zweiten Rand erstreckt, wobei der erste Rand der Plattenanordnung (110) zum Montageabschnitt (121) des Rahmens (120) hin und der zweite Rand der Plattenanordnung (110) vom Montageabschnitt (121) des Rahmens (120) weg liegt, wobei die Plattenanordnung (110) mindestens ein Eingriffsglied (128) umfasst, das sich von jedem Ende in Richtung eines der Seitenflansche (124) des Rahmens (120) erstreckt, wobei ein jedes Eingriffsglied (128) mit der Kanalanordnung (127, 227, 327, 427) des jeweiligen Seitenflansches (124) in Eingriff kommt, wobei ein Spalt (123) zwischen dem ersten Rand der Plattenanordnung (110) und dem Montageabschnitt (121) des Rahmens (120) durchgängig über die Bewegung der Plattenanordnung (110) zwischen der nicht abgelenkten Position und der ersten abgelenkten Position beibehalten wird.

14. Gehäuse (160), das die Plattenbaugruppe (100) nach den Ansprüchen 1 bis 13 umfasst, das aufweist:
einen Unterbau (161) mit einer Oberseite, einem Boden, einer ersten Seite und einer zweiten Seite, wobei der Unterbau (161) mindestens eine erste Wand (163) umfasst, die sich zwischen der Oberseite und dem Boden und zwischen der ersten und der zweiten Seite erstreckt, wobei der Unterbau (161) ebenfalls eine offene Vorderseite definiert; und
eine Plattenbaugruppe (100), die an der ersten Wand (163) des Unterbaus (161) montiert ist, wobei die Plattenbaugruppe (100) einen Rahmen (120) und eine Plattenanordnung (110) umfasst, die ausgebildet ist, um Telekommunikationsbauteile (150, 152, 154) aufzunehmen, wobei die Plattenanordnung (110) eine erste Hauptfläche (112), von der aus erste Anschlussstellen der Telekommunikationsbauteile (150, 152, 154) zugänglich sind, und eine zweite Hauptfläche (113) aufweist, von der aus zweite Anschlussstellen der Telekommunikationsbauteile (150, 152, 154) zugänglich sind, wobei die Plattenanordnung (110) ausgebildet ist, um sich relativ zum Rahmen (120) zwischen einer nicht abgelenkten Position, einer ersten abgelenkten Position und einer zweiten abgelenkten Position zu bewegen,
wobei die erste Hauptfläche (112) der Plattenanordnung (110) zur Oberseite des Unterbaus (161) hin liegt, wenn sich die Plattenanordnung (110) in der nicht abgelenkten Position befindet;
und wobei die erste Hauptfläche (112) der Plattenanordnung (110) mindestens teilweise in Richtung der offenen Vorderseite des Unterbaus (161) hin liegt, wenn sich die Plattenanordnung (110) in der ersten abgelenkten Position befindet.

15. Verfahren für das Zugreifen auf ein Abschlussfeld, das auf einer Platte (110) einer Telekommunikationsplattenbaugruppe vorhanden ist, wobei die Platte an einem Rahmen (120) montiert ist, wobei das Verfahren die folgenden Schritte aufweist:
Wegziehen der Platte (110) von einem Montageabschnitt (121) des Rahmens (120), so dass sich ein erstes Eingriffsglied (128) der Plattenanordnung (110) längs eines ersten Kanals (130) und ein zweites Eingriffsglied (128) der Plattenanordnung (110) längs eines zweiten Kanals (140) in einer ersten Richtung bewegt;
Fortsetzen des Wegziehens der Platte (110) vom Montageabschnitt (121), bis sich das erste Eingriffsglied (128) der Platte (110) mit einem Kanalsegment (134) des ersten Kanals (130) ausrichtet und das zweite Eingriffsglied (128) mit einer Arretierung (147) des zweiten Kanals (140) in Eingriff kommt; und
Drehen der Plattenanordnung (110) um eine Drehachse, die sich längs des zweiten Eingriffsgliedes (128) erstreckt und Bewegen des ersten Eingriffsglieds (128) durch das Kanalsegment (134) des ersten Kanals (130) in einer zweiten Richtung, die von der ersten Richtung abweichend ist.

16. Verfahren für das Zugreifen auf ein Abschlussfeld, das auf einer Platte (110) einer Telekommunikationsplattenbaugruppe vorhanden ist, wobei die Platte an einem Rahmen (120) montiert ist, wobei das Verfahren die folgenden Schritte aufweist:
Wegziehen der Platte (110) von einem Montageabschnitt (121) des Rahmens (120), so dass sich ein erstes Eingriffsglied (128) der Plattenanordnung (110) längs eines ersten Kanals (130) bewegt und ein Kanalsegment (134) des ersten Kanals (130) passiert, und sich ein zweites Eingriffsglied (128) der Plattenanordnung (110) längs eines zweiten Kanals (140) bewegt und eine Arretierung (147) des zweiten Kanals (140) passiert;
Fortsetzen des Wegziehens der Platte (110) vom Montageabschnitt (121), bis das zweite Eingriffsglied (128) einen Übergang (145) zwischen dem ersten und zweiten Segment (143, 144) des zweiten Kanals (140) erreicht; und
Drehen der Plattenanordnung (110) um eine Drehachse, die sich längs des ersten Eingriffsgliedes (128) erstreckt und Bewegen des zweiten Eingriffsglieds (128) durch das zweite Segment (144) des zweiten Kanals (140).

## Revendications

1. Ensemble formant panneau de télécommunications (100) comprenant :
un châssis (120) comprenant deux parois de support (124) et un agencement de panneau (110) s'étendant entre des première et seconde sections de montage (114), chaque section de montage (114) étant couplée à un des rabats latéraux (124) du châssis (120),
**caractérisé en ce que**
chacune des parois de support (124) définit un agencement de canal (127), chaque agencement de canal (127) comprenant un premier canal (130) et un second canal (140) qui est séparé du premier canal (130) ;
chaque section de montage (114) est couplée à un des rabats latéraux (124) du châssis (120) par l'intermédiaire de premiers et seconds presse-garnitures (128), le premier presse-garniture (128) de chaque section de montage (114) venant en prise avec le premier canal (130) de la paroi de support (124) respective et le second presse-garniture (128) de chaque section de montage (114) venant en prise avec le second canal (140) du rabat latéral (124) respectif ;
dans lequel l'agencement de panneau (110) est mobile par rapport au châssis (120) entre au moins une position non défléchie et une première position défléchie par déplacement des presses-garnitures au sein des agencements de canal (127).

2. Ensemble formant panneau (100) selon la revendication 1, dans lequel l'agencement de panneau (110) est également mobile vers une seconde position défléchie qui est différente de la première position défléchie et de la position non défléchie.

3. Ensemble formant panneau (100) selon la revendication 1 ou 2, dans lequel l'agencement de panneau (110) pivote autour d'un axe s'étendant à travers les premiers presse-garnitures (128) lorsque l'agencement de panneau (110) est déplacé vers la première position défléchie.

4. Ensemble formant panneau (100) selon l'une quelconque des revendications 1 à 3, dans lequel l'agencement de panneau (110) pivote autour d'un axe s'étendant à travers les seconds presse-garnitures (128) lorsque l'agencement de panneau (110) est déplacé vers la seconde position défléchie.

5. Ensemble formant panneau (100) selon l'une quelconque des revendications 1 à 4, dans lequel chaque canal (130, 140) comprend un premier segment (131, 143) et un second segment (134, 144), dans lequel les premiers presse-garnitures (128) de l'agencement de panneau (110) se déplacent le long des seconds segments (134) des premiers canaux (130) lorsque l'agencement de panneau (110) est déplacé vers la première position défléchie.

6. Ensemble formant panneau (100) selon la revendication 5, dans lequel les seconds presse-garnitures (128) de l'agencement de panneau (110) se déplacent le long des seconds segments (144) des seconds canaux (140) lorsque l'agencement de panneau (110) est déplacé vers la seconde position défléchie.

7. Ensemble formant panneau (100) selon la revendication 5 ou 6, dans lequel un cran (137, 146) est défini au niveau de la seconde extrémité (136, 142) du second segment (134, 144) de chaque canal (130, 140), dans lequel l'agencement de panneau (110) est verrouillé pour empêcher un déplacement par rapport au châssis (120) lorsqu'au moins deux des presse-garnitures (128) viennent en prise avec deux des crans (137, 146).

8. Ensemble formant panneau (100) selon l'une quelconque des revendications 5 à 7, dans lequel une détente (147) est fournie au niveau d'un bord de canal du premier segment (143) du second canal (140).

9. Ensemble formant panneau (100) selon l'une quelconque des revendications 1 à 8, dans lequel les canaux (130, 140) sont configurés pour empêcher une déviation de l'agencement de panneau (110) par rapport à la base (120) lorsque l'agencement de panneau (110) est situé au niveau d'une première position latérale par rapport à la section de montage (121) de la base (120).

10. Ensemble formant panneau (100) selon l'une quelconque des revendications 1 à 8, dans lequel chaque presse-garniture (128) comprend un poteau dimensionné de manière à s'étendre à travers le canal (130, 140) respectif et une tête dimensionnée de manière à venir en prise avec la paroi de support (124) respective du châssis (120).

11. Ensemble formant panneau (100) selon l'une quelconque des revendications 1 à 8, dans lequel le châssis (120) comprend une section de montage (121) et dans lequel les parois de support (124) comprennent des rabats latéraux s'étendant à partir d'extrémités opposées de la section de montage (121) du châssis (120).

12. Ensemble formant panneau (100) selon l'une quelconque des revendications 1 à 11, comprenant :
un agencement de panneau (110) s'étendant d'une première extrémité vers une seconde extrémité, l'agencement de panneau (110) comprenant un premier presse-garniture (128) et un second presse-garniture (128) au niveau de chaque extrémité de l'agencement de panneau (110) ;
une première paroi de support (124A, 224, 324, 424) définissant un premier agencement de canal (127, 227, 327, 427) qui est configuré pour venir en prise avec les premier et second presse-garnitures (128) s'étendant à partir de la première extrémité de l'agencement de panneau (110), le premier agencement de canal (127, 227, 327, 427) comprenant un premier segment de canal (143, 231, 331, 431) s'étendant entre une première extrémité distale et une transition, le premier agencement de canal (127, 227, 337, 427) comprenant également un second segment de canal (134, 232, 332, 333, 432, 433) s'étendant dans une direction différente de celle du premier segment de canal (143, 231, 331, 431), le premier segment de canal (143, 231, 331, 431) définissant une détente (147, 235, 337, 437, 438) au niveau d'un emplacement intermédiaire entre la première extrémité distale et la transition ; et
une seconde paroi de support (124B) définissant un second agencement de canal (127) qui est configuré pour venir en prise avec les premier et second presse-garnitures (128) s'étendant à partir de la seconde extrémité de l'agencement de panneau (110), la seconde paroi de support (124B) étant alignée latéralement avec la première paroi de support (124A), le second agencement de canal (127) correspondant à une image symétrique du premier agencement de canal (127).

13. Ensemble formant panneau (100) selon l'une quelconque des revendications 1 à 12, comprenant :
un châssis (120) comprenant deux rabats latéraux (124) s'étendant entre des extrémités opposées d'une section de montage (121), chacun des rabats latéraux (124) définissant un agencement de canal (127, 227, 327, 427), la section de montage (121) comprenant des doigts de retenue (122) qui définissent un passage d'exploitation ; et
un agencement de panneau (110) monté sur le châssis (120) afin de se déplacer entre au moins une position non défléchie et une première position défléchie, l'agencement de panneau (110) s'étendant d'une première extrémité vers une seconde extrémité et d'un premier bord vers un second bord, le premier bord de l'agencement de panneau (110) faisant face à la section de montage (121) du châssis (120) et le second bord de l'agencement de panneau (110) faisant face en s'en détournant à la section de montage (121) du châssis (120), l'agencement de panneau (110) comprenant au moins un presse-garniture (128) s'étendant à partir de chaque extrémité en direction d'un des rabats latéraux (124) du châssis (120), chaque presse-garniture (128) venant en prise avec l'agencement de canal (127, 227, 327, 427) du rabat latéral (124) respectif, dans lequel un espace (123) est préservé entre le premier bord de l'agencement de panneau (110) et la section de montage (121) du châssis (120) tout au long d'un mouvement de l'agencement de panneau (110) entre la position non défléchie et la première position défléchie.

14. Enceinte (160) comprenant l'ensemble formant panneau (100) selon l'une quelconque des revendications 1 à 13, comprenant :
une base (161) présentant un dessus, un fond, un premier côté, et un second côté, la base (161) comprenant au moins une première paroi (163) s'étendant entre le dessus et le fond et entre les premier et second côtés, la base (161) définissant également un avant ouvert ; et
un ensemble formant panneau (100) monté sur la première paroi (163) de la base (161), l'ensemble formant panneau (100) comprenant un châssis (120) et un agencement de panneau (110) qui est configuré pour contenir des composants pour télécommunications (150, 152, 154), l'agencement de panneau (110) présentant une première surface principale (112) à partir de laquelle des premiers ports des composants pour télécommunications (150, 152, 154) sont accessibles et une seconde surface principale (113) à partir de laquelle des seconds ports des composants pour télécommunications (150, 152, 154) sont accessibles, l'agencement de panneau (110) étant configuré pour se déplacer par rapport au châssis (120) entre une position non défléchie, une première position défléchie, et une seconde position défléchie,
dans lequel la première surface principale (112) de l'agencement de panneau (110) regarde le dessus de la base (161) lorsque l'agencement de panneau (110) est dans la position non défléchie ;
et dans lequel la première surface principale (112) de l'agencement de panneau (110) regarde au moins partiellement en direction de l'avant ouvert de la base (161) lorsque l'agencement de panneau (110) est dans la première position défléchie.

15. Procédé d'accès à un champ de terminaison fourni sur un panneau (110) d'un ensemble formant panneau de télécommunications, le panneau étant monté sur un châssis (120), le procédé comprenant les étapes suivantes consistant à :
tirer le panneau (110) en l'éloignant d'une section de montage (121) du châssis (120) de sorte qu'un premier presse-garniture (128) de l'agencement de panneau (110) se déplace le long d'un premier canal (130) et un second presse-garniture (128) de l'agencement de panneau (110) se déplace le long d'un second canal (140) dans une première direction ;
continuer à tirer le panneau (110) en l'éloignant de la section de montage (121) jusqu'à ce que le premier presse-garniture (128) du panneau (110) soit aligné avec un segment de canal (134) du premier canal (130) et que le second presse-garniture (128) vienne en prise avec une détente (147) du second canal (140) ; et
pivoter l'agencement de canal (110) autour d'un axe de pivotement qui s'étend le long du second presse-garniture (128) et déplacer le premier presse-garniture (128) à travers le segment de canal (134) du premier canal (130) dans une seconde direction qui est différente de la première direction.

16. Procédé d'accès à un champ de terminaison fourni sur un panneau (110) d'un ensemble formant panneau de télécommunications, le panneau étant monté sur un châssis (120), le procédé comprenant les étapes suivantes consistant à :
tirer le panneau (110) en l'éloignant d'une section de montage (121) du châssis (120) de sorte qu'un premier presse-garniture (128) de l'agencement de panneau (110) se déplace le long d'un premier canal (130) et dépasse un segment de canal (134) du premier canal (130) et qu'un second presse-garniture (128) de l'agencement de panneau (110) se déplace le long d'un second canal (140) et dépasse une détente (147) du second canal (140) ;
continuer à tirer le panneau (110 en l'éloignant de la section de montage (121) jusqu'à ce que le second presse-garniture (128) atteigne une transition (145) entre des premier et second segments (143, 144) du second canal (140) ; et
pivoter l'agencement de panneau (110) autour d'un axe de pivot qui s'étend le long du premier presse-garniture (128) et déplacer le second presse-garniture (128) à travers le second segment (144) du second canal (140).
